(19) Europäisches Patentamt
European Patent Office
Office européen des brevets

(11) **EP 4 382 446 A1**

(12) **EUROPEAN PATENT APPLICATION**
published in accordance with Art. 153(4) EPC

(43) Date of publication:
**12.06.2024 Bulletin 2024/24**

(21) Application number: **22853050.7**

(22) Date of filing: **02.08.2022**

(51) International Patent Classification (IPC):
**B65D 1/16** (2006.01)   **B32B 15/08** (2006.01)
**B32B 15/09** (2006.01)   **B65D 25/14** (2006.01)

(52) Cooperative Patent Classification (CPC):
**B32B 15/08; B32B 15/09; B65D 1/16; B65D 25/14**

(86) International application number:
**PCT/JP2022/029631**

(87) International publication number:
**WO 2023/013631 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.08.2021 JP 2021126958**

(71) Applicant: **Toyo Seikan Group Holdings, Ltd.
Shinagawa-ku
Tokyo 141-8627 (JP)**

(72) Inventors:
• **YAMAMOTO, Hiromi
Yokohama-shi, Kanagawa 240-0062 (JP)**
• **KASHIWAKURA, Takuya
Yokohama-shi, Kanagawa 240-0062 (JP)**
• **SAKURAGI, Arata
Yokohama-shi, Kanagawa 240-0062 (JP)**
• **ZHANG, Nan
Yokohama-shi, Kanagawa 240-0062 (JP)**

(74) Representative: **J A Kemp LLP
80 Turnmill Street
London EC1M 5QU (GB)**

(54) **SEAMLESS CAN AND COATED METAL PLATE**

(57)    The present invention relates to a seamless can including an inner surface coating film at least on a can inner surface side and a coated metal sheet that can be used to mold the seamless can. The inner surface coating film contains a polyester resin and a resol-type phenolic resin and/or an amino resin as a curing agent, and the inner surface coating film has a gel fraction (A) represented by Formula below of 55% or more and less than 90%. This makes it possible to provide a seamless can, in particular, a drawn and wall-ironed can, that has excellent retort whitening resistance and temporal embrittlement resistance, does not experience coating film peeling during heat treatment after molding, and has an excellent coating film covering property. Gel fraction (A) = $(W2a/W1a) \times 100$ (%), where W1a represents a mass of the inner surface coating film isolated from a coated metal substrate cut out from the seamless can, and W2a represents a mass of the isolated inner surface coating film after being immersed in MEK at ordinary temperature for 60 minutes and then taken out and dried.

EP 4 382 446 A1

**Description**

Technical Field

The present invention relates to a seamless can formed of a coated metal sheet and a coated metal sheet that can be used to form the seamless can, and more specifically relates to a seamless can including a coating film having excellent retort whitening resistance and temporal embrittlement resistance, in which metal exposure due to harsh drawing and ironing and coating film peeling due to heat treatment are effectively prevented, and that has an excellent coating film covering property and corrosion resistance, and a coated metal sheet that can be used to form the seamless can.

Background Art

An organic resin-coated metal sheet (a thermoplastic resin-coated metal sheet) obtained by coating a metal sheet such as aluminum with a plastic film made of a thermoplastic resin (a thermoplastic resin film) has long been known as a material for cans. It is also well known to subject the organic resin-coated metal sheet to a process such as drawing or drawing and ironing to form a seamless can to be filled with a beverage or the like, or press-mold the sheet to form a can lid, such as an easy-open end can lid. For example, an organic resin-coated metal sheet that includes, as an organic resin coating layer, a thermoplastic resin film made of a crystalline polyester resin mainly including ethylene terephthalate units is used as a can material for a seamless can (hereinafter, may be referred to as drawn and wall-ironed can) molded by drawing and ironing or the like (e.g., Patent Document 1). This organic resin-coated metal sheet can be subjected to drawing and ironing molding under dry conditions without using a coolant (cooing and lubricating agent). Thus, this metal sheet has an environmental advantage as compared to a case where a coolant is used to subject a metal sheet to drawing and ironing molding in the related art.

Such an organic resin-coated metal sheet is produced by a method in which a pre-formed thermoplastic resin film made of thermoplastic polyester resin or the like is attached to a metal sheet by thermal adhesion, or a film lamination method such as an extrusion lamination method in which a molten thin film of extruded thermoplastic polyester resin or the like is attached to a metal sheet.

However, in the film lamination method, when forming the film, it is difficult to control the film thickness at a small thickness and the thickness of the film tends to increase, which may be problematic in terms of economic efficiency.

In place of the organic resin-coated metal sheet according to such a film lamination method, it has also been proposed to produce a drawn and wall-ironed can under dry conditions from a coated metal sheet obtained by forming a coating film on a metal sheet by a coating method capable of forming a film with a small thickness.

For example, Patent Document 2 below proposes a coated metal sheet for a drawn and wall-ironed can, the coated metal sheet being a double-sided coated metal sheet and including a film to be on a can inner surface side after processing and a film to be on a can outer surface side after processing, in which the film to be on the can inner surface side after processing has a dry coating amount of from 90 to 400 mg/100 cm$^2$ and a glass transition temperature of 50 to 120°C and has a pencil hardness of H or more, a percent elongation of from 200 to 600%, and a kinetic friction coefficient of from 0.03 to 0.25 under a test condition of 60°C, and the film to be on the can outer surface side after processing has a dry coating amount of from 15 to 150 mg/100 cm$^2$ and a glass transition temperature of from 50 to 120°C and has a pencil hardness of H or more under a test condition of 60°C.

Citation List

Patent Literature

Patent Document 1: JP 2001-353812 A
Patent Document 2: JP 3872998 B

Summary of Invention

Technical Problem

It has been found that, in a seamless can such as a drawn and wall-ironed can molded under dry conditions from a coated metal sheet, after the can body is molded, adhesion between a coating film and a metal substrate (hereinafter, may be referred to as "coating film adhesion") significantly decreases due to residual stress in the coating film generated by harsh processing such as drawing and ironing. Such a decrease in adhesion adversely affects various performance, such as reducing corrosion resistance. This residual stress can be removed by performing heat treatment on the can body in a predetermined condition, which can improve adhesion. However, in a case where such heat treatment is performed, due to rapid release of the residual stress in the coating film generated by harsh processing, shrinkage force acts on the interface between the coating film and the metal substrate. Particularly at a thinned site of a can trunk portion where processing is harsh, metal exposure may occur due the coating film peeling from the metal substrate, leading to reduction in the coating film covering property. Thus, the coating film desirably does not peel (has coating film peeling resistance) at the time of such heat treatment.

In addition, depending on the type of content to be filled in the seamless can, the content may be subjected to sterilization treatment under high temperature and high humidity conditions such as retort treatment after filling. In such a case, it is required that the coating film does not whiten (has retort whitening resistance).

On the other hand, a polyester-based coating film formed from a polyester-based coating composition has a specific problem in that processability decreases (temporal embrittlement) when stored over time in a predetermined environment. The reason for the occurrence of the temporal embrittlement phenomenon has not yet been accurately identified, but the inventors of the present invention presume it to be as follows. That is, the coating film becomes embrittled and processability is reduced due to reorientation (transition to an equilibrium state) of the molecular chain of the polyester resin due to enthalpy relaxation over time in the coating film. When drawing and ironing or the like is performed under dry conditions using the coated metal sheet as described above in a state where the coating film has become embrittled over time, coating film defects such as metal exposure are likely to occur during processing, the coating film covering property at the inner surface becomes insufficient, and it is difficult to obtain seamless cans, such as drawn and wall-ironed cans, having sufficient corrosion resistance. Thus, the coating film is required not to be embrittled over time (have temporal embrittlement resistance).

The above-described Patent Document 2 proposes a coated metal sheet and a draw and wall-ironed can molded from the coated metal sheet capable of withstanding drawing and ironing by forming, on a surface of the coated metal sheet to be on the can inner surface side, a coating film that can achieve hardness, percent elongation, and the like even when heat near 60°C is generated by consecutive drawing and ironing. However, in Patent Document 2, there are no findings on the removal of residual stress and improvement in adhesion by heat treatment after molding the drawn and wall-ironed can using such a coated metal sheet or findings on coating film peeling due to heat treatment. Thus, Patent Document 2 does not solve such issues. Further, there are no findings on the retort whitening resistance and the temporal embrittlement resistance of a polyester-based coating film formed on a coated metal sheet, and these issues are not solved either.

An object of the present invention is to provide a seamless can such as a drawn and wall-ironed can including a coating film in which the occurrence of coating film peeling due to heat treatment after can molding is suppressed and that has a high coating film covering property even after heat treatment and excellent retort whitening resistance and temporal embrittlement resistance, and a coated metal sheet that can be used to form the seamless can.

Solution to Problem

According to the present invention, provided is a seamless can including an inner surface coating film at least on a can inner surface side, the inner surface coating film containing a polyester resin and a resol-type phenolic resin and/or an amino resin as a curing agent, and the inner surface coating film has a gel fraction (A) represented by Formula (1a) below of 55% or more and less than 90%:

$$\text{Gel fraction (A)} = (W2a/W1a) \times 100 \ (\%) \ ... \ (1a)$$

where W1a represents a mass of the inner surface coating film isolated from a coated metal substrate cut out from the seamless can, and W2a represents a mass of the isolated inner surface coating film after being immersed in MEK at ordinary temperature for 60 minutes and then taken out and dried.

In the seamless can of the present invention, preferably,

[1] the resol-type phenolic resin is an m-cresol-based resol-type phenolic resin,
[2] the resol-type phenolic resin is blended in an amount of more than 2 parts by mass and less than 10 parts by mass with respect to 100 parts by mass of the polyester resin,
[3] the amino resin is a benzoguanamine resin, and the benzoguanamine resin is blended in an amount of 8 parts by mass or more and less than 25 parts by mass with respect to 100 parts by mass of the polyester resin,
[4] the inner surface coating film further contains an acid catalyst, a content of the acid catalyst in the inner surface coating film being less than 0.5 parts by mass with respect to 100 parts by mass of the polyester resin,

[5] a difference between a gel fraction (B) of the inner surface coating film represented by Formula (2a) below and the gel fraction (A) is less than 10%:

$$\text{Gel fraction (B)} = [(W4a - W5a)/(W3a - W5a)] \times 100\ (\%) \dots (2a)$$

where W3a represents a mass of a coated metal substrate cut out from the seamless can and having the inner surface coating film formed thereon, W4a represents a mass of the coated metal substrate after being immersed in MEK at 80°C for 60 minutes and then taken out and dried, and W5a represents a mass of a metal substrate after the inner surface coating film is removed from the coated metal substrate.

[6] a thickness of a central portion of a can trunk is from 20 to 75% of a thickness of a central portion of a can bottom, and a thickness of the inner surface coating film at the central portion of the can trunk is from 20 to 75% of a thickness of the inner surface coating film at the central portion of the can bottom,

[7] a thickness ratio of the inner surface coating film to a metal substrate (thickness of the inner surface coating film/thickness of the metal substrate) is substantially identical in a can bottom portion and a can trunk portion,

[8] the seamless can further includes an outer surface coating film on a can outer surface side, wherein the outer surface coating film contains a polyester resin and an amino resin as a curing agent;

[9] the outer surface coating film has a gel fraction (A) represented by Formula (3a) below of 40% or more and less than 90%:

$$\text{Gel fraction (A)} = (W7a/W6a) \times 100\ (\%) \dots (3a)$$

where W6a represents a mass of the outer surface coating film isolated from a coated metal substrate cut out from the seamless can, and W7a represents a mass of the isolated outer surface coating film after being immersed in MEK at ordinary temperature for 60 minutes and then taken out and dried,

[10] the inner surface coating film at a central portion of a can trunk has a heat shrinkage rate represented by Formula (5) below of 30% or less:

$$\text{Heat shrinkage rate}\ (\%) = (\Delta L_1/L_0) \times 100 \dots (5)$$

$L_0$: an initial length (measurement portion) of the coating film isolated from the central portion of the can trunk in the height direction;

$\Delta L_1$: the maximum shrinkage amount (maximum value of the shrinkage length) of the coating film of the portion corresponding to $L_0$ in the height direction when the temperature is raised from 30°C to 200°C at a temperature rise rate of 5°C/min while applying a load of $5.20 \times 10^5 N/m^2$ per unit area,

[11] the inner surface coating film at a central portion of a can trunk has a heat shrinkage rate represented by Formula (6) below of 50% or less:

$$\text{Heat shrinkage rate}\ (\%) = (\Delta L_2/L_0) \times 100\ (\%) \dots (6)$$

$L_0$ is an initial length of the coating film isolated from the central portion of the can trunk in a height direction;

$\Delta L_2$: a maximum shrinkage length of the coating film of a portion corresponding to $L_0$ in the height direction when the temperature is raised from 30°C to 200°C at a temperature rise rate of 5°C/min in an unloaded state,

[12] a covering degree of the inner surface coating film is less than 200 mA in terms of ERV, and

[13] the seamless can is a drawn and wall-ironed can.

According to the present invention, also provided is a coated metal sheet for a seamless can, the seamless can including an inner surface coating film at least on a surface to be a can inner surface, wherein the inner surface coating film contains a polyester resin and a resol-type phenolic resin and/or an amino resin as a curing agent, the inner surface coating film has a gel fraction (A) represented by Formula (1b) of 55% or more and less than 90%, and a difference between a gel fraction (B) of the inner surface coating film represented by Formula (2b) below and the gel fraction (A) is less than 10%.

$$\text{Gel fraction (A)} = (W2b/W1b) \times 100 \ (\%) \ ... \ (1b)$$

where W1b represents a mass of the inner surface coating film isolated from the coated metal sheet, and W2b represents a mass of the isolated inner surface coating film after being immersed in MEK at ordinary temperature for 60 minutes and then taken out and dried;

$$\text{Gel fraction (B)} = [(W4b - W5b)/(W3b - W5b)] \times 100 \ (\%) \ ... \ (2b)$$

where W3b represents a mass of a coated metal sheet having the inner surface coating film formed thereon, W4b represents a mass of the coated metal sheet after being immersed in MEK at 80°C for 60 minutes and then taken out and dried, and W5b represents a mass of a metal sheet after the inner surface coating film is removed from the coated metal sheet.

It is preferable that the coated metal sheet for a seamless can of the present invention further includes an outer surface coating film on a surface to be a can outer surface, wherein the outer surface coating film contains a polyester resin and an amino resin as a curing agent, and the outer surface coating film has a gel fraction (A) represented by Formula (3b) below of 40% or more and less than 90%:

$$\text{Gel fraction (A)} = (W7b/W6b) \times 100 \ (\%) \ ... \ (3b)$$

where W6b represents a mass of the outer surface coating film isolated from the coated metal sheet, and W7b represents a mass of the isolated outer surface coating film after being immersed in MEK at ordinary temperature for 60 minutes and then taken out and dried.

Advantageous Effects of Invention

As a result of intensive studies on coating film peeling resistance at the time of heat treatment after molding a seamless can such as a drawn and wall-ironed can formed of a coated metal sheet on which a polyester-based coating film is formed, retort whitening resistance of the polyester-based coating film with respect to retort treatment after filling the can with content, and further temporal embrittlement resistance, the inventors of the present invention have found that coating film peeling resistance, retort whitening resistance, and temporal embrittlement resistance are correlated with the gel fraction (A) of the polyester-based coating film measured in the state of an isolated coating film and determined by the above Formula (1), and have found a suitable range of the gel fraction (A) of the coating film with which all the above resistances can be achieved in a compatible manner, and further a coating film capable of exhibiting the gel fraction (A) of such a coating film.

That is, since the seamless can of the present invention is a seamless can obtained by harsh processing such as drawing and ironing, there is no coating film peeling at the time of heat treatment. Thus, the degree of coating of the inner surface coating film expressed in terms of ERV is less than 200 mA and metal exposure is effectively prevented even after heat treatment is performed after seamless can molding, and the seamless can has an excellent coating film covering property. In addition, since the residual stress is removed by the heat treatment, the coating film adhesion is improved, and thus excellent corrosion resistance can be exhibited. Further, the seamless can has excellent retort whitening resistance such that the inner surface coating film is not whitened even after retort treatment is performed after the seamless can is filled with contents. Further, the inner surface coating film can be prevented from being embrittled even after the film is stored for a long time, and the film has excellent temporal embrittlement resistance.

In addition, the coated metal sheet of the present invention has excellent elongation and processability of a coating film. Breakage occurring at the can trunk portion (sometimes referred to as "can trunk breakage" in the present invention) even when the coated metal sheet is subjected to harsh processing such as drawing ironing under dry conditions and also metal exposure is effectively prevented. Thus, the coated metal sheet has a high coating film covering property even after drawing and ironing or the like is performed, and has excellent can forming processability. Further, since the residual stress generated by drawing and ironing or the like can be reduced by controlling the gel fraction of the inner surface coating film formed on the surface to be the can inner surface, it is possible to effectively suppress coating film peeling when heat treatment is performed after can body molding, and it is possible to provide a seamless can such as a drawn and wall-ironed can having a high coating film covering property and excellent corrosion resistance even after heat treatment is performed. In addition, as described above, a seamless can such as a drawn and wall-ironed can molded using this coated metal sheet can also exhibit excellent retort whitening resistance. Further, the coated metal sheet of the present invention has excellent temporal embrittlement resistance that can prevent embrittlement of the coating film and can maintain good processability even after being stored over time.

Description of Embodiments

Coated Metal Sheet

In the coated metal sheet to be used in the present invention, it is an important characteristic that the inner surface coating film of the surface to be the can inner surface side contains a polyester resin and a resol-type phenolic resin and/or an amino resin as a curing agent, and that the gel fraction (A) of the inner surface coating film measured in the state of an isolated coating film represented by Formula (1b) of the inner surface coating film is in a range of from 55% or more to less than 90% from the perspective of coating film peeling resistance during heat treatment, retort whitening resistance, and temporal embrittlement resistance. The reason for this will be described below.

First, a description will be given from the perspective of coating film peeling resistance during heat treatment. In a case where the coated metal sheet is used to mold a seamless can such as a drawn and wall-ironed can at a high speed under dry conditions, the coated metal sheet is subjected to harsh processing and/or deformation with temperature rising due to processing heat generation. At this time, since the coating film formed on the coated metal sheet is largely deformed through can-forming processing, a large residual stress is generated in the coating film during processing. In this state, it is thought that when the can body after molding is subjected to heat treatment and heated to a temperature equal to or higher than the glass transition temperature of the polyester resin, shrinkage force acts on the interface between the coating film and the metal substrate as the residual stress is relaxed, and thus coating film peeling occurs and the metal is exposed. To suppress such a coating film peeling phenomenon during the heat treatment, it is necessary to reduce the residual stress of the coating film generated at the time of can-forming processing.

As a result of intensive studies on reduction of the residual stress of the coating film generated at the time of processing and suppression of coating film peeling at the time of heat treatment due to the reduction, the inventors of the present invention have found that the gel fraction (mass proportion of coating film component gelled by crosslinking reaction and insoluble in a solvent) representing the degree of crosslinking of the entire inner surface coating film, more specifically, the gel fraction (A) of the inner surface coating film measured in the state of an isolated coating film obtained by the above Formula (1b) greatly affects the magnitude of the residual stress of the coating film after processing and thus the coating film peeling phenomenon at the time of heat treatment.

As described above, when a drawn and wall-ironed can or the like is molded at a high speed under dry conditions using a coated metal sheet, residual stress is generated in the coating film of the coated metal sheet after processing. It is thought that the residual stress particularly increases when a base resin such as a polyester resin constituting the coating film is highly crosslinked with a curing agent. The gel fraction (A) in the inner surface coating film of the coated metal sheet is considered to represent the gel fraction of the entire inner surface coating film, that is, the degree of crosslinking (degree of crosslinking) of the entire coating film, as will be described later. When the gel fraction (A) in the inner surface coating film of the coated metal sheet is 90% or more, the entire coating film is highly crosslinked. Thus, the residual stress after processing becomes large and it becomes difficult to prevent the coating film from peeling off during heat treatment. On the other hand, when the gel fraction (A) is adjusted to less than 90%, the degree of crosslinking of the entire coating film is not too high and is appropriately controlled. Thus, when the coated metal sheet is subjected to drawing and ironing or the like, the residual stress of the coating film after processing is thought to become small. This makes it possible to reduce the shrinkage force generated at the interface between the coating film and the metal substrate due to relaxation of the residual stress at the time of heat treatment, and as a result, coating film peeling is prevented from occurring. That is, by adjusting the gel fraction (A) to less than 90%, the coating film covering property is excellent even after heat treatment is performed after molding, and coating film adhesion is also improved by removing residual stress by heat treatment. Thus, a seamless can such as a drawn and wall-ironed having excellent corrosion resistance can be provided.

Next, a description will be given from the perspective of retort whitening resistance of the coating film. When the polyester-based coating film is subjected to sterilization treatment such as retort treatment, the coating film may be whitened due to water absorption or the like. However, when the degree of crosslinking of the entire coating film is high to some extent and the coating film has a dense crosslinked structure, it is thought that whitening of the coating film due to the retort treatment can be suppressed by suppressing entry of moisture into the coating film. Thus, the whitening phenomenon of the coating film caused by retort treatment is also greatly affected by the degree of crosslinking of the entire coating film, that is, the gel fraction (A) of the inner surface coating film. When the gel fraction (A) is less than 55%, the coating film does not have a dense crosslinked structure, and it is difficult to suppress whitening of the coating film. On the other hand, when the gel fraction (A) is 55% or more, this indicates that the entire coating film has a dense crosslinked structure to some extent, and thus it is possible to suppress whitening of the coating film. That is, by adjusting the gel fraction (A) to 55% or more, a drawn and wall-ironed can having excellent retort whitening resistance can be provided.

Next, a description will be given from the perspective of temporal embrittlement resistance of the coating film. As described above, it is presumed that the temporal embrittlement of the polyester-based coating film is caused by reorientation (transition to an equilibrium state) of the molecular chain of the polyester resin due to enthalpy relaxation. Since this enthalpy relaxation is caused by molecular motion of the polyester resin, it is thought that as the polyester resin is crosslinked with the curing agent, the molecular motion is suppressed and the enthalpy relaxation is less likely to occur. Thus, this temporal embrittlement phenomenon is also greatly affected by the degree of crosslinking of the entire coating film, that is, the gel fraction (A) of the inner surface coating film. When the gel fraction (A) is less than 55%, the polyester resin is not sufficiently crosslinked and it is difficult to suppress temporal embrittlement of the coating film. On the other hand, when the gel fraction (A) is 55% or more, the polyester resin in the entire coating film is moderately crosslinked to suppress molecular motion, thereby making it possible to suppress temporal embrittlement of the coating film.

Accordingly, in the inner surface coating film of the coated metal sheet to be used in the present invention, it is important that the gel fraction (A) is in the range of from 55% or more to less than 90% from the perspective of achieving coating film peeling resistance during heat treatment, retort whitening resistance, and further, temporal embrittlement resistance in a compatible manner. This makes it possible to provide a seamless can, particularly a drawn and wall-ironed can, including a coating film that is effectively prevented from coating film peeling even after heat treatment is performed after forming the seamless can such as a drawn and wall-ironed can, has an excellent coating film covering property, and also has excellent retort whitening resistance and temporal embrittlement resistance.

It is desirable that the gel fraction (A) is within a range of from 55% or more to less than 90%, preferably from 60 to 88%, more preferably more than 62% and less than 85%, still more preferably from 65 to 84%, particularly preferably from 65 to 80%, and most preferably 68% or more and less than 78%. As described above, when the gel fraction is higher than the above range, coating film peeling may occur during heat treatment. When the gel fraction is lower than the above range, the degree of crosslinking of the coating film becomes low, there is a possibility that the retort whitening resistance and temporal embrittlement resistance, and also the heat resistance of the coating film decrease. When the heat resistance of the coating film decreases, the coating film is likely to be softened due to temperature increase when the drawn and wall-ironed can is molded at a high speed, and the coating film may be likely to stick to a mold during molding. Especially on the can inner surface side, when the can body is removed from a molding punch after molding, a phenomenon in which the can body sticks to the molding punch to make it difficult to separate the can body from the molding punch (poor stripping property) occurs. As a result, the can body may buckle or break, resulting in a decrease in productivity.

The coated metal sheet to be used in the present invention is desirably a double-sided coated metal sheet further including an outer surface coating film on a surface to be the can outer surface side after processing, and the outer surface coating film also desirably contains a polyester resin, and more desirably contains a curing agent, preferably an amino resin.

Also in the outer surface coating film, from the perspective of coating film peeling resistance, retort whitening resistance, and temporal embrittlement resistance, it is desirable that the gel fraction (A) calculated by the above Formula (3b) is within a range of 40% or more and less than 90%, preferably 55% or more and less than 90%, more preferably more than 60% and 88% or less, still more preferably from 65 to 85%, particularly preferably from 68 to 84%, and most preferably from 70 to 84%.

Further, in the coated metal sheet of the present invention, the difference between the gel fraction (B) of the inner surface coating film measured in the state of a coated metal substrate as determined by Formula (2b) and the gel fraction (A) is preferably less than 10%. The reason for this will be described below.

It is known that in a polyester-based coating film, depending on the combination of a specific polyester resin and a curing agent, the polyester-based coating film has a coating film structure in which the curing agent is concentrated in the vicinity of the coating film surface. This is presumed to be a phenomenon caused as the curing agent is localized on the surface of the coating film in the process of forming the coating film because the compatibility between the polyester resin serving as the main agent and the curing agent is low. When the coating film has such a coating film structure, it is considered that the coating film surface is highly crosslinked by the concentration of the curing agent, while the concentration of the curing agent inside the coating film decreases. Thus, a dense crosslinked structure cannot be formed as the entire coating film, and it is difficult to exhibit excellent retort whitening resistance. Thus, from the perspective of retort whitening resistance, it is desirable that the polyester resin and the curing agent have high compatibility, have a coating film structure in which the curing agent is uniformly distributed in the polyester resin even after formation of a coating film, and also form a dense crosslinked structure as the entire coating film.

The above-described gel fraction (B) in the inner surface coating film of the coated metal sheet is obtained by immersing the coated metal substrate in a MEK (methyl ethyl ketone) as a solvent to extract an uncrosslinked component (uncured component) soluble in the solvent in the coating film, and determining the gel fraction from the mass of the coating film component which becomes insoluble in the solvent. When the gel fraction is measured by this method, an uncrosslinked component is not extracted from the surface on the metal substrate side that is not in contact with the solvent, and is instead selectively extracted from the surface of the coating film which is in contact with the solvent. However, in the case of a coating film in which the curing agent is concentrated at the surface of the coating film as described above and in which only the surface of the coating film is highly crosslinked, the solvent cannot penetrate into the coating film due to the concentrated layer of the curing agent densely present at the surface of the coating film, and the uncrosslinked component present inside the coating film is hardly extracted. Thus, the gel fraction (B) measured by the above method likely strongly reflects the degree of crosslinking in the vicinity of the surface of the coating film rather than the degree of crosslinking of the entire coating film. On the other hand, the above-described gel fraction (A) is determined from the mass of a coating film component that is insoluble in a solvent by immersing the coating film in the state of an isolated coating film in which the coating film is isolated from the coated metal substrate in the solvent and extracting an uncrosslinked component. In the case of this method, since the uncrosslinked portion is extracted not only from the surface of the coating film but also from the surface on the metal substrate side, the solvent penetrates into the interior and the uncrosslinked component is extracted even when the coating film has a coating film structure in which the curing agent is concentrated in the vicinity of the surface of the coating film. Thus, the gel fraction (A) measured by the above method likely reflects the degree of crosslinking of the entire coating film. Therefore, in a coating film in which the curing agent is concentrated at the surface of the coating film and only the surface of the coating film is highly crosslinked, a difference occurs between the values of the gel fraction (A) and the gel fraction (B), and the gel fraction (B) often has a higher value. On the other hand, in the case of a coating film in which the curing agent is uniformly distributed and the degree of crosslinking of the entire coating film is uniform, the values of the gel fraction (A) and the gel fraction (B) are often relatively close to each other.

As described above, in the present invention, from the perspective of retort whitening resistance, it is desirable that the polyester resin and the curing agent have high compatibility, the coating film has a coating film structure in which the curing agent is uniformly distributed in the coating film and a dense crosslinked structure across the entire coating film. Thus, it is desirable that the gel fraction (A) and the gel fraction (B) have close values, more specifically, that the difference between the gel fraction (A) and the gel fraction (B) is less than 10%. When the difference between the gel fraction (A) and the gel fraction (B) is 10% or more, it is thought that the coating film has a coating film structure in which the curing agent is concentrated at the surface of the coating film and, as described above, it may be difficult to exhibit retort whitening resistance. The gel fraction (B) is desirably in a range of more than 45% and 99% or less, preferably more than 50% and less than 98%, more preferably more than 52% and less than 95%, further preferably from 55 to 94%, particularly preferably from 55 to 90%, and most preferably 58% or more and less than 88%.

In the above-described outer surface coating film of the coated metal sheet to be used in the present invention, the difference between the gel fraction (A) and the gel fraction (B) is also preferably less than 10%, although no limitation is intended.

The gel fraction (B) in the outer surface coating film of the coated metal sheet is calculated from the following Formula (4b), and the gel fraction (B) is desirably in a range of more than 45% and 99% or less, preferably more than 50% and less than 98%, more preferably more than 52% and less than 95%, further preferably from 55 to 94%, particularly preferably from 55 to 90%, and most preferably 58% or more and less than 88%.

$$\text{Gel fraction (B) (\%)} = [(W9b - W10b)/(W8b - W10b)] \times 100 \;...\; (4b)$$

where W8b represents a mass of the coated metal sheet having the outer surface coating film formed thereon, W9b represents a mass of the coated metal sheet after being immersed in MEK at 80°C for 60 minutes and then taken out and dried, and W10b represents a mass of a metal sheet after the outer surface coating film is removed from the coated metal sheet.

When the gel fraction (B) of the outer surface coating film is lower than the above range, the degree of crosslinking of the surface of the coating film decreases. Thus, the coating film hardness decreases, and there is a possibility that outer surface defects such as coating film scratching may occur during molding of a seamless can, such as a drawn and wall-ironed can.

The glass transition temperature (Tg) of the inner surface coating film is preferably in the range of 30°C or higher, preferably higher than 40°C, more preferably higher than 45°C and 120°C or lower, still more preferably from 50°C to 110°C, particularly preferably higher than 55°C and 100°C or lower, and most preferably higher than 55°C and 90°C or lower. In a case where Tg is lower than the above range, a flavor component of the content is likely to be sorbed when a can body after molding is filled with contents. This may result in poor aroma sorption resistance and the barrier property of the coating film being reduced, which may result in poor corrosion resistance. On the other hand, in a case where Tg is higher than 120°C, processability and elongation of the coating film may be reduced and metal exposure may occur by molding. This results in poor can forming processability, and residual stress in the coating film may increase to cause coating film peeling during heat treatment.

The Tg of the outer surface coating film is also preferably in the range of 30°C or higher, preferably higher than 40°C, more preferably higher than 45°C and 120°C or lower, still more preferably from 50°C to 110°C or lower, particularly preferably higher than 55°C and 100°C or lower, and most preferably higher than 55°C and 90°C or lower. In a case where Tg is lower than the range described above, hardness of the coating film is reduced, and thus external surface defects such as coating film scratching may occur. On the other hand, in a case where Tg is higher than 120°C, the processability and elongation of the coating film are reduced and metal exposure may occur by molding, which results in poor can forming processability.

As described above, by using the coated metal sheet including the inner surface coating film at least on the surface to be the can inner surface to mold a seamless can, in particular, a drawn and wall-ironed can, the entirety of the can can be covered with the inner surface coating film continuous from the bottom portion to the trunk portion on the can inner surface side. Furthermore, in a case where a double-sided coated metal sheet also including the outer surface coating film on the surface to be the can outer surface after drawing and ironing is used, the entirety can also be covered with the outer surface coating film continuous from the bottom portion to the trunk portion on the can outer surface side.

Preferably, the film thickness of the inner surface coating film is in a range of from 0.2 to 20 $\mu$m, preferably from 1 to 16 $\mu$m, and more preferably more than 2 $\mu$m and 12 $\mu$m or less, as a dry film thickness. In addition, preferably, the dry coating film mass is in a range of from 3 to 300 mg/dm$^2$, preferably from 15 to 220 mg/dm$^2$, more preferably from 15 to 150 mg/dm$^2$, and more preferably greater than 25 mg/dm$^2$ and 150 mg/dm$^2$ or less. In the case of a thinner film than the above range, metal exposure is likely to occur during molding, leading to a poor covering property of the inner surface coating film. On the other hand, in a case of a thicker film than in the above range, the residual stress generated during processing increases, so that coating film peeling becomes more likely to occur during heat treatment after drawing and ironing, and the film thickness increases beyond necessity, which results in inferior economic efficiency.

Further, when the content to be filled in the drawn and wall-ironed can is an acidic beverage having strong corrosiveness, it is necessary to make the film thickness relatively thick to ensure corrosion resistance. The film thickness is preferably in a range of more than 5 $\mu$m and 16 $\mu$m or less, preferably more than 6 $\mu$m and 12 $\mu$m or less, and more preferably from 6.5 to 10 $\mu$m. The dry coating film mass is preferably in a range of more than 70 mg/dm$^2$ and 150 mg/dm$^2$ or less, preferably more than 85 mg/dm$^2$ and 150 mg/dm$^2$ or less, and more preferably from 90 to 140 mg/dm$^2$.

On the other hand, in a case where the content to be filled in the seamless can is a low acidic beverage or the like having a relatively weak corrosive property, the corrosion resistance can be ensured even with a relatively thin film. Thus, the thickness is in a range of 1 $\mu$m or more and less than 6.5 $\mu$m, preferably more than 2 $\mu$m and less than 6.5 $\mu$m, and more preferably from 2.5 to 6 $\mu$m. Preferably, the dry coating film mass is in a range of 15 mg/dm$^2$ or more and less than 90 mg/dm$^2$, preferably greater than 25 mg/dm$^2$ and less than 90 mg/dm$^2$, and more preferably from 30 to 85 mg/dm$^2$. In the case of a thinner film than the above range, the corrosion resistance is inferior, and in a case of exceeding the above range, the thickness becomes large beyond necessity, which results in inferior economic efficiency.

Preferably, the film thickness of the outer surface coating film is in a range of from 0.2 to 20 $\mu$m, preferably from 1 to 16 $\mu$m, more preferably more than 2 $\mu$m and 12 $\mu$m or less, and further preferably more than 2 $\mu$m and 6.5 $\mu$m or less, as a dry film thickness. In addition, preferably, the dry coating film mass is in a range of from 3 to 300 mg/dm$^2$, preferably from 15 to 220 mg/dm$^2$, more preferably more than 25 mg/dm$^2$ and 150 mg/dm$^2$ or less, still more preferably more than 25 mg/dm$^2$ and less than 90 mg/dm$^2$. In the case of a thinner film than the above range, metal exposure is likely to occur during molding, leading to a poor coating film covering property at the outer surface. On the other hand, in the case of a thicker film than the above range, the residual stress generated during processing increases, and thus coating film peeling becomes likely to occur during heat treatment after drawing and ironing molding.

Note that, with respect to the film thicknesses of the inner surface coating film and the outer surface coating film of the coated metal sheet, it is preferable that the inner surface coating film, which is required to have a higher covering property, is thicker than the outer surface coating film.

Examples of a metal sheet used as the metal substrate of the coated metal sheet include, but are not limited to, a hot-rolled steel sheet, a cold-rolled steel sheet, a molten galvanized steel sheet, an electrogalvanized steel sheet, an alloy plated steel sheet, an aluminum-zinc alloy plated steel sheet, an aluminum sheet, a tin plated steel sheet, a stainless steel sheet, a copper sheet, a copper plated steel sheet, a tin-free steel, a nickel plated steel sheet, an ultra-thin tin plated steel sheet, and a chromized steel sheet, and one obtained by subjecting these sheets to various types of surface treatment, such as phosphoric acid chromate treatment or zirconium-based chemical conversion treatment, application-type treatment in which a water-soluble resin such as polyacrylic acid and a zirconium salt such as aluminum-zirconium carbonate are combined, or the like as necessary.

In the present invention, of the above metal sheets, an aluminum sheet is preferable. As the aluminum sheet, in addition to a pure aluminum sheet, an aluminum alloy sheet, specifically, an aluminum alloy sheet of the 3000 series, the 5000 series, or the 6000 series in "JIS H4000" can be preferably used, and an aluminum alloy sheet is preferable from the perspective of strength. As the aluminum alloy sheet, in addition to the surface-treated aluminum alloy sheet that has been subjected to the various types of surface treatment described above, an untreated aluminum alloy sheet can be used because the coating film made of the coating composition described above has excellent adhesion to the metal substrate.

The thickness of the metal sheet is in a range of from 0.1 to 1.00 mm, preferably from 0.15 to 0.40 mm, more preferably from 0.15 to 0.30 mm, and further preferably from 0.20 to 0,28 mm, from the perspective of can body strength and moldability.

Inner Surface Coating Film and Outer Surface Coating Film

In the coated metal sheet of the present invention and the seamless can described later, the inner surface coating film, preferably both the inner surface coating film and the outer surface coating film, contain a polyester resin as a main agent and a curing agent.

In the inner surface coating film, the content of the polyester resin, preferably a non-crystalline polyester resin described below, is preferably greater than 50 mass%, more preferably 60 mass% or more, further preferably 70 mass% or more, and particularly preferably 80 mass% or more.

Similarly, in the outer surface coating film, the content of the polyester resin, preferably a non-crystalline polyester resin, is preferably greater than 50 mass%, more preferably 60 mass% or more, further preferably 70 mass% or more, and particularly preferably 80 mass% or more.

Polyester Resin

In the coated metal sheet of the present invention and the seamless can to be described later, a polyester resin is used as a main agent (main component) constituting the inner surface coating film and the outer surface coating film. Herein, the main agent is defined as a component having the highest content (mass ratio) among resin components constituting the coating film. In the present invention, a mass rate occupied by the polyester resin among resin components constituting the inner surface coating film and the outer surface coating film is preferably greater than 50 mass%, more preferably 60 mass% or more, further preferably 70 mass% or more, and particularly preferably 80 mass% or more.

Examples of a polyvalent carboxylic acid component constituting the polyester resin include: aromatic dicarboxylic acids such as terephthalic acid, isophthalic acid, orthophthalic acid, and 2,6-naphthalenedicarboxylic acid; aliphatic dicarboxylic acids such as succinic acid, glutaric acid, adipic acid, azelaic acid, sebacic acid, dodecanedioic acid, and dimer acid; unsaturated dicarboxylic acids such as maleic acid (maleic anhydride), fumaric acid, and terpene-maleic adducts; alicyclic dicarboxylic acids such as 1,4-cyclohexanedicarboxylic acid, tetrahydrophthalic acid, hexahydroisophthalic acid, and 1,2-cyclohexenedicarboxylic acid; and trivalent or higher valent carboxylic acids such as trimellitic acid (trimellitic anhydride), pyromellitic acid (pyromellitic anhydride), and methylcyclohexenetricarboxylic acid. From these, one, or two or more can be selected and used. Among these polyvalent carboxylic acids, it is preferable to use one or more selected from the group consisting of isophthalic acid, orthophthalic acid, terephthalic acid, 2,6-naphthalenedicarboxylic acid, trimellitic acid, adipic acid, sebacic acid, fumaric acid, maleic acid, dimer acid, and 1,4-cyclohexanedicarboxylic acid.

In the present invention, from the perspective of hardness, heat resistance, aroma sorption resistance, retort whitening resistance, and the like of the resulting coating film, when the total amount of polyvalent carboxylic acid components constituting the polyester resin is 100 mol%, it is preferable to contain at least one, or two or more selected from terephthalic acid, orthophthalic acid, isophthalic acid, and 2,6-naphthalenedicarboxylic acid, each of which is an aromatic dicarboxylic acid, in a total amount of 70 mol% or more, preferably 80 mol% or more, and more preferably 90 mol% or more. In addition, among the aromatic dicarboxylic acids described above, terephthalic acid and isophthalic acid are particularly preferable, and when the total amount of the polyvalent carboxylic acid components constituting the polyester resin is 100 mol%, preferably, the total amount of terephthalic acid and isophthalic acid is 70 mol% or more, preferably 80 mol% or more, and further preferably 90 mol% or more. When a blend body of two or more polyester resins is used as the polyester resin and when the total amount of all polyvalent carboxylic acid components constituting the blend body of the polyester resins is 100 mol%, it is preferable to contain at least one, or two or more selected from terephthalic acid, orthophthalic acid, isophthalic acid, and 2,6-naphthalenedicarboxylic acid, each of which is an aromatic dicarboxylic acid, in a total amount of 70 mol% or more, preferably 80 mol% or more, and more preferably 90 mol% or more. In addition, when the total amount of all polyvalent carboxylic acid components constituting the blend body of the polyester resins is 100 mol%, more preferably, the total content of terephthalic acid and isophthalic acid is preferably 70 mol% or more, preferably 80 mol% or more, and further preferably 90 mol% or more.

It is desirable that the content of the isophthalic acid is in the range of 2 mol% or more, preferably from 5 to 90 mol%, more preferably more than 10 mol% and 85 mol% or less, still more preferably from 15 to 80 mol%, and particularly preferably from 20 to 80 mol% from the perspective of aroma sorption resistance and can forming processability. This makes it possible to densify the coating film (make the coating film have high density), and as a result, it is possible to improve the aroma sorption resistance and improve the can forming processability of the coating film. Thus, the occurrence of coating film defects during molding can be suppressed, leading to improvement of the coating film covering property.

Further, the terephthalic acid is preferably contained in an amount of 10 mol% or more, preferably from 15 to 90%, more preferably 19 mol% or more and less than 84 mol%, still more preferably from 25 to 80 mol%, particularly preferably from 30 to 80 mol%, and most preferably from 40 to 76 mol% from the perspective of heat resistance. Similarly, when a blend body of two or more polyester resins is used as the polyester resin, it is desirable that, when the total amount of all polyvalent carboxylic acid components constituting the blend body of the polyester resins is 100 mol%, the content of isophthalic acid is 2 mol% or more, preferably from 5 to 90 mol%, more preferably more than 10 mol% and 85 mol% or less, still more preferably from 15 to 80 mol%, and particularly preferably from 20 to 80 mol%. Further, the terephthalic acid in an amount of 10 mol% or more, preferably from 15 to 90%, more preferably 19 mol% or more and less than 84 mol%, still more preferably from 25 to 80 mol%, particularly preferably from 30 to 80 mol%, and most preferably from 40 to 76 mol%.

As the polyvalent carboxylic acid component constituting the polyester resin, a component other than the aromatic dicarboxylic acid, for example, an aliphatic dicarboxylic acid or an alicyclic dicarboxylic acid may be contained in an amount as a residual proportion of the aromatic dicarboxylic acid, that is, less than 30 mol%. However, when the proportion of the aliphatic dicarboxylic acid component or the alicyclic dicarboxylic acid component is increased, an aroma component in a content is likely to be sorbed by the coating film when the content is filled in the can body, and there is a possibility that the aroma sorption resistance of the coating film becomes poor and the retort whitening resistance also decreases. Thus, it is desirable that the proportion of the components other than the aromatic dicarboxylic acids such as aliphatic dicarboxylic acid in the polyvalent carboxylic acid components constituting the polyester resin is less than 30 mol%, preferably less than 20 mol%, more preferably less than 10 mol%, still more preferably less than 7 mol%, particularly preferably less than 5 mol%, and most preferably less than 4 mol%.

In a case where a blend body of two or more polyester resins is used as the polyester resin, desirably, when the total amount of all the polyvalent carboxylic acid components constituting the blend body of the polyester resins is 100 mol%, the proportion of the aliphatic dicarboxylic acid or alicyclic dicarboxylic acid is less than 20 mol%, preferably less than 15 mol%, more preferably less than 10 mol%, and particularly preferably less than 7 mol%,.

As the polyhydric alcohol component constituting the polyester resin, one or a combination of two or more of aliphatic glycols such ethylene glycol, propylene glycol (1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-aliphatic glycols; ether glycols such as diethylene glycol, triethylene glycol, polyethylene glycol, polypropylene glycol, and polytetramethylene glycol; alicyclic polyalcohols such as 1,4-cyclohexanedimethanol, 1,3-cyclohexanedimethanol, 1,2-cyclohexanedimethanol, tricyclodecane glycols, and water-added bisphenols; and trihydric or higher polyalcohols such as trimethylolpropane, trimethylolethane, and pentaerythritol can be used. In the present invention, among the polyhydric alcohol components described above, ethylene glycol, propylene glycol, neopentyl glycol, 1,4-butanediol, 1,4-cyclohexanedimethanol, and diethylene glycol can be suitably used as components constituting the polyester resin.

In particular, when the total amount of the polyhydric alcohol components constituting the polyester resin is 100 mol%, at least one or two or more selected from ethylene glycol, propylene glycol, 2-methyl-1,3-propanediol, and 1,4-butanediol in a total amount of 20 mol% or more, preferably 30 mol% or more, more preferably 40 mol% or more, further preferably 50 mol% or more, and particularly preferably 60 mol% or more are preferably contained, from the perspective of can forming processability and coating film peeling resistance at the time of heat treatment. Further, from the perspective of aroma sorption resistance, when the total amount of the polyhydric alcohol components constituting the polyester resin is 100 mol%, the amount of 1,4-butanediol is preferably less than 40 mol%, more preferably less than 30 mol%, still more preferably less than 20 mol%, and particularly preferably less than 10 mol%. When the content of 1,4-butanediol is 40 mol% or more, the aroma sorption resistance may deteriorate.

Also in a case where a blend body of two or more polyester resins is used as the polyester resin, in the total amount of all the polyhydric alcohol components constituting the blend body of the polyester resins, at least one or two or more selected from ethylene glycol, propylene glycol, 2-methyl-1,3-propanediol, and 1,4-butanediol is suitably contained in a total amount of 20 mol% or more, preferably 30 mol% or more, more preferably 40 mol% or more, further preferably 50 mol% or more, and particularly preferably 60 mol% or more. Further, considering aroma sorption resistance, the amount of 1,4-butanediol is preferably less than 40 mol%, more preferably less than 30 mol%, still more preferably less than 20 mol%, and particularly preferably less than 10 mol%.

The polyester resin can be produced by a known method such as polycondensation of one or more types of the polyvalent carboxylic acid components described above and one or more types of the polyhydric alcohol components described above, a method of depolymerization after polycondensation with a polyvalent carboxylic acid component such as terephthalic acid, isophthalic acid, trimellitic anhydride, trimellitic acid, or pyromellitic acid, or ring-opening addition of an acid anhydride such as phthalic anhydride, maleic anhydride, trimellitic anhydride, or ethylene glycol bis-trimellitate dianhydride after polycondensation.

The polyester resin desirably has an acid value of from 0.1 mgKOH/g to 40 mgKOH/g, preferably from 0.5 mgKOH/g to 25 mgKOH/g, more preferably from 1 mgKOH/g to 15 mgKOH/g, still more preferably 1.0 mgKOH/g or more and less than 10 mgKOH/g, particularly preferably 1.0 mgKOH/g to 8 mgKOH/g, and most preferably 1.0 mgKOH/g or more and less than 5 mgKOH/g from the perspective of factors such as curability, retort whitening resistance, and adhesion to the metal substrate. In a case where the acid value is lower than the above range, adhesion between the metal substrate and the coating film may be reduced. On the other hand, in a case where the acid value is higher than the above range, as compared to a case where the acid value is in the above range, the coating film becomes likely to absorb water, which may reduce the retort whitening resistance, and the number of reaction points with the curing agent increases to make the crosslinking density high, and can forming processability and coating film peeling resistance are reduced to cause metal exposure, which may reduce the covering property of the coating film.

In a case where the polyester resin is a blend body in which two or more types of polyester resins are blended, the sum of the values each obtained by multiplying an acid value and a mass fraction of each of the polyester resins is defined as an average acid value of the blend body ($AV_{mix}$), and the average acid value need only be within the acid value range described above.

A hydroxyl value of the polyester resin is not limited to but is desirably in a range of 20 mgKOH/g or less, preferably 10 mgKOH/g or less, more preferably from 1 to 10 mgKOH/g, and further preferably from 2 to 8 mgKOH/g, from the perspective of factors such as can forming processability, coating film peeling during heat treatment, and retort whitening resistance.

In a case where the polyester resin is a blend body in which two or more types of polyester resins are blended, the sum of the values each obtained by multiplying the hydroxyl value and the mass fraction of each of the polyester resins is defined as an average hydroxyl value of the blend body, and the average hydroxyl value need only be within the range described above.

Preferably, the glass transition temperature (Tg) of the polyester resin is 30°C or higher, preferably higher than 40°C, more preferably higher than 45°C and 120°C or lower, still more preferably from 50°C to 100°C, particularly preferably higher than 55°C and 100°C or lower, and most preferably higher than 55°C and 90°C or lower. When Tg is lower than the above range, when a container produced by drawing and ironing or the like as described above is filled with contents, an aroma component (flavor component) contained in the content easily diffuses into the coating film due to an increase in mobility of the resin. Thus, a sorption amount of the aroma component is increased, which may deteriorate the aroma sorption resistance, and also heat resistance, corrosion resistance, and retort whitening resistance. On the other hand, when the Tg is higher than 120°C, the processability and elongation of the coating film are reduced, which results in poor can forming processability, and thus metal exposure may occur by molding. As a result, the covering property of the coating film after molding may be deteriorated, the residual stress may increase, and the coating film peeling resistance during heat treatment may deteriorate.

In the present invention, two or more types of polyester resins each having a different Tg can be blended for use. By blending polyester resins each having a different Tg, it may be possible to form a coating film that is excellent in impact resistance and unlikely to generate a coating film defect even when subjected to external impact, as compared to only using one type of polyester resin.

In this case as well, it is sufficient that $Tg_{mix}$ of the polyester resin blend calculated by the following Formula (7) is within the Tg range described above:

$$1/Tg_{mix} = (W1/Tg1) + (W2/Tg2) + \cdots + (Wm/Tgm) \ldots (7)$$

$$W1 + W2 + \cdots + Wm = 1$$

In the formula, $Tg_{mix}$ represents the glass transition temperature (K) of the polyester resin blend, and Tg1, Tg2, $\cdots$, and Tgm each represent the glass transition temperature (K) of each polyester resin used (polyester resin 1, polyester resin 2, $\cdots$, and polyester resin m). W1, W2, $\cdots$, and Wm each represent a mass fraction of each of the polyester resins (polyester resin 1, polyester resin 2, $\cdots$, and polyester resin m).

The number average molecular weight (Mn) of the polyester resin is not limited to but preferably in a range of from 1,000 to 100,000, more preferably from 3,000 to 50,000, still more preferably from 5,000 to 20,000, and particularly preferably from 10,000 to 20,000, from the perspective of can forming processability. When Mn is smaller than the above range, the coating film may become brittle and thus have poor can forming processability. When Mn is greater than the above range, paint stability may be reduced.

Furthermore, the polyester resin is preferably a non-crystalline polyester resin from the perspective of can forming processability, dent resistance, and coating material formation. Here, "non-crystalline" means that no clear melting point of a crystalline component is exhibited in measurement by a differential scanning calorimeter (DSC). As compared to a crystalline polyester resin, the non-crystalline polyester resin has excellent solubility in a solvent and is easily made into a coating material, and it is possible to form a coating film excellent in can forming processability and dent resistance. Note that in the present invention, a mass ratio occupied by the non-crystalline polyester resin among all the polyester resin components contained in the inner surface coating film and/or the outer surface coating film is preferably greater than 40 mass%, more preferably 50 mass% or more, further preferably 60 mass% or more, particularly preferably 70 mass% or more, and most preferably 80 mass% or more.

Curing Agent

The inner surface coating film in the coated metal sheet and the seamless can such as the drawn and wall-ironed can of the present invention is characterized by containing a resol-type phenolic resin and/or an amino resin as a curing agent. The outer surface coating film described above desirably contains an amino resin as a curing agent.

In the coated metal sheet of the present invention and the seamless can described later, for the coating composition (hereinafter, may be referred to as "inner surface coating composition") for forming the inner surface coating film, a resol-type phenolic resin and/or an amino resin can be used as the curing agent as described above from the perspective of hygiene, and a resol-type phenolic resin can be more suitably used particularly from the perspective of can forming processability, aroma sorption resistance, and the like. As a coating composition for forming the outer surface coating film (hereinafter, sometimes referred to as "outer surface coating composition"), an amino resin that can form a transparent coating film without coloring derived from the curing agent can be preferably used. On the other hand, the coating film to be formed becomes yellow, and thus attention needs to be paid in a case where the resol-type phenolic resin described above is used in the coating composition for forming the outer surface coating film.

Resol-type Phenolic Resin

The resol-type phenolic resin is a resin obtained by reacting a phenolic compound and formaldehyde in the presence of an alkaline catalyst. Examples of the phenolic compound used include o-cresol, p-cresol, p-tert-butylphenol, p-ethylphenol, 2,3-xylenol, 2,5-xylenol, phenol, m-cresol, m-ethylphenol, 3,5-xylenol, and m-methoxyphenol. From these, one, or two or more can be mixed and used.

From the perspective of curability, of the above phenolic compounds, a resol-type phenolic resin containing a phenolic compound that becomes trifunctional in the reaction with formaldehyde as a starting raw material in an amount of more than 20 mass%, preferably more than 30 mass%, more preferably more than 50 mass%, further preferably 60 mass% or more, and particularly preferably 80 mass% or more is preferable. Examples of the phenolic compound that becomes trifunctional in the reaction with formalin include phenol, m-cresol, m-ethylphenol, 3,5-xylenol, and m-methoxyphenol, and among these, one, or two or more can be selected and used. When the amount of these trifunctional phenolic compounds is 20 mass% or less, sufficient curability cannot be achieved and thus the degree of curing of the coating film may decrease. Among these trifunctional phenolic compounds, from the perspective of curability, m-cresol is more preferable, and a resol-type phenolic resin containing m-cresol as a main component of the starting raw material (hereinafter, sometimes referred to as "m-cresol-based resol-type phenolic resin") is particularly preferable. As a result, it is possible to achieve a sufficient degree of curing of the coating film, which is desirable from the perspective of heat resistance, corrosion resistance, retort whitening resistance, and the like of the coating film. The main component herein is defined as a component having the highest content (mass ratio) among phenolic compounds serving as the starting raw material. As the m-cresol-based resol-type phenolic resin, preferably, one containing m-cresol as a starting raw material in an amount of more than 50 mass%, preferably 60 mass% or more, and further preferably 80 mass% or more is preferable.

Other than the above phenolic compounds that become trifunctional, in a case where a phenolic compound that becomes bifunctional in the reaction with formaldehyde is used as the starting raw material, preferably, the content of the phenolic compound is less than 70 mass%, preferably less than 50 mass%, and more preferably less than 30 mass%. When the content is 70 mass% or more, the curability may decrease. Examples of the phenolic compound that becomes bifunctional include o-cresol, p-cresol, p-tert-butylphenol, p-ethylphenol, 2,3-xylenol, and 2,5-xylenol.

Furthermore, as the resol-type phenolic resin used in the present invention, from the perspective of compatibility with the polyester resin and curability, one obtained by alkyl-etherifying (alkoxy-methylating) a part or all of methylol groups contained with alcohols having 1 to 12 carbon atoms can be preferably used. The proportion of the methylol groups to be alkyl-etherified is preferably 50% or more, more preferably 60% or more, and further preferably 80% or more. When the proportion of alkyl etherification is less than 50%, the compatibility with the polyester resin decreases, and the coating film may become cloudy or sufficient curability cannot be achieved. Examples of the alcohol used in alkyl etherification include monovalent alcohols having from 1 to 8 carbon atoms, preferably from 1 to 4 carbon atoms, and examples of suitable monovalent alcohols can include methanol, ethanol, n-propanol, n-butanol, and isobutanol, and n-butanol is more preferable.

The number of the alkyl-etherified methylol groups (alkoxy methyl groups) is preferably 0.3 or more, preferably from 0.5 to 3, as the average of the alkoxy methyl groups per phenol nucleus. When the number is less than 0.3, curability with the polyester resin deteriorates. The number average molecular weight (Mn) of the resol-type phenolic resin is preferably in a range of from 500 to 3,000, preferably from 800 to 2,500. When Mn is smaller than the above range, the crosslinking density of the coating film formed tends to increase, residual stress after molding tends to increase, and thus the coating film peeling resistance may deteriorate. On the other hand, the curability deteriorates when Mn is larger than the above range. As a result, the heat resistance and corrosion resistance, retort whitening resistance, and the like of the coating film may deteriorate.

Amino Resin

Examples of the amino resin include a methylolated amino resin obtained by reaction of an amino component such as melamine, urea, benzoguanamine, acetoguanamine, steroguanamine, spiroguanamine, or dicyandiamide, and an aldehyde component such as formaldehyde, paraformaldehyde, acetaldehyde, or benzaldehyde. One obtained by alkyl-etherifying a part or all of the methylol groups of the methylolated amino resin by an alcohol having 1 to 12 carbon atoms is also included in the above amino resin. These can be used alone or in combination of two or more.

As the amino resin, from the perspective of hygiene, can forming processability and the like, a methylolated amino resin using benzoguanamine (benzoguanamine resin), a methylolated amino resin using melamine (melamine resin), or a methylolated amino resin using urea (urea resin) is preferable, the benzoguanamine resin or the melamine resin is more preferable from the perspective of curability (reactivity with the polyester resin), and the benzoguanamine resin is most preferable from the perspective of coating film peeling resistance at the time of heat treatment and retort whitening resistance.

As the benzoguanamine resin, benzoguanamine resins obtained by alkyl-etherifying a part or all of the methylol groups of a benzoguanamine resin with an alcohol such as methanol, ethanol, n-butanol, or i-butanol, for example, a methyl-etherified benzoguanamine resin, an ethyl-etherified benzoguanamine resin, a butyl-etherified benzoguanamine resin, or a mixed-etherified benzoguanamine resin of methyl ether and butyl ether, a mixed-etherified benzoguanamine resin of methyl ether and ethyl ether, and a mixed-etherified benzoguanamine resin of ethyl ether and butyl ether are preferable.

As the melamine resin, melamine resins obtained by alkyl-etherifying a part or all of methylol groups of a melamine resin with an alcohol such as methanol, ethanol, n-butanol, or i-butanol, for example, a methyl-etherified melamine resin, an ethyl-etherified melamine resin, a butyl-etherified melamine resin, or a mixed etherified melamine resin of methyl ether and butyl ether, a mixed etherified melamine resin of methyl ether and ethyl ether, and a mixed etherified melamine resin of ethyl ether and butyl ether are preferable.

As the urea resin, a urea resin obtained by alkyl-etherifying a part or all of methylol groups of a urea resin with an alcohol such as methanol, ethanol, n-butanol, or i-butanol, for example, a methyl-etherified urea resin, an ethyl-etherified urea resin, a butyl-etherified urea resin, or a mixed etherified urea resin of methyl ether and butyl ether, a mixed etherified urea resin of methyl ether and ethyl ether, and a mixed etherified urea resin of ethyl ether and butyl ether are preferable.

Examples of the functional groups included in the melamine resin and the benzoguanamine resin described above include an imino group ($>$NH), an N-methylol group ($>$NCH$_2$OH), and an N-alkoxymethyl group ($>$NCH$_2$OR; R is an alkyl group), and these functional groups act as a reaction point in a crosslinking reaction with a carboxyl group (-COOH) or a hydroxyl group (-OH) contained in the polyester resin, which is a main agent, or in a self-condensation reaction between amino resins (note that the imino group only contributes to the self-condensation reaction). Note that, with respect to the number of the reaction points (functional groups) described above, when compared between monomers of the melamine resin and the benzoguanamine resin, it is thought that the number of the reaction points of the melamine resin is larger due to the molecular structure. As a result, while the melamine resin has excellent curability, the crosslinking density of the formed coating film tends to increase, and coating film peeling may occur during heat treatment depending on the blended amount. On the other hand, while the benzoguanamine resin has poor curability as compared to the melamine resin, the crosslinking density of the formed coating film is less likely to increase. Thus, the benzoguanamine resin is considered to be more suitable than the melamine resin from the perspective of coating film peeling resistance. Therefore, to achieve curability and coating film peeling resistance during heat treatment in a compatible manner, a mixed amino resin in which the melamine resin and the benzoguanamine resin are used in combination and mixed in a predetermined ratio may be used. In such a case, the blending amount ratio (mass ratio) of the melamine resin and the benzoguanamine resin is desirably from 90: 10 to 5:95, preferably from 80:20 to 10:90, more preferably from 80:20 to 20:80, still more preferably from 75:25 to 25:75, and particularly preferably from 70:30 to 30:70.

The curing agent is desirably blended in a range of from 1 to 40 parts by mass, preferably from 1 to 30 parts by mass, and more preferably from 2 to 20 parts by mass with respect to 100 parts by mass of the polyester resin.

In a case where the resol-type phenolic resin is used as the curing agent, the resol-type phenolic resin is preferably blended in a range of from 1 to 30 parts by mass, preferably from 1.5 to 20 parts by mass, more preferably from 2 to 15 parts by mass, still preferably from 2 to 10 parts by mass, particularly preferably greater than 2 parts by mass and less than 10 parts by mass, and most preferably from 2.5 to 8.5 parts by mass with respect to 100 parts by mass of the polyester resin as the main agent (solid content).

When an amino resin is used as the curing agent, the blending amount of the melamine resin is desirably less than 10 parts by mass, preferably less than 5.5 parts by mass with respect to 100 parts by mass of the polyester resin.

When a melamine resin is used as the curing agent, the melamine resin is preferably blended in an amount of 0.1 parts by mass or more and less than 10 parts by mass, preferably 0.1 parts by mass or more and less than 5.5 parts by mass, more preferably from 0.5 to 5.4 parts by mass, still more preferably from 0.5 to 5 parts by mass, particularly preferably from 0.5 to 4 parts by mass, and most preferably 1 part by mass or more and less than 4 parts by mass with respect to 100 parts by mass of the polyester resin.

In a case where a benzoguanamine resin is used as the curing agent, the benzoguanamine resin is preferably blended in an amount of from 4 to 40 parts by mass, preferably from 5 to 30 parts by mass, more preferably from 6 to 28 parts by mass, still preferably from 7 to 25 parts by mass, particularly preferably 8 parts by mass or more and less than 25 parts by mass, and most preferably from 10 to 24 parts by mass with respect to 100 parts by mass of the polyester resin.

In a case where a mixed amino resin of the melamine resin and the benzoguanamine resin described above is used as the curing agent, the mixed amino resin is preferably blended in an amount of from 2 to 25 parts by mass, preferably from 2 to 20 parts by mass, more preferably from 2.5 to 15 parts by mass, and further preferably 3 parts by mass or more and less than 10 parts by mass with respect to 100 parts by mass of the polyester resin.

When the curing agent amount is smaller than the above range, sufficient curability cannot be obtained, the degree of crosslinking of the coating film decreases, the gel fraction (A) of the coating film may become lower than the above range, and retort whitening resistance, temporal embrittlement resistance, and heat resistance may decrease. When the heat resistance of the coating film decreases, the coating film may become easily stuck to a mold when the seamless can is molded at a high speed. Particularly, on the can inner surface side, a stripping property defect occurs. As a result, the can body may buckle or break, resulting in a decrease in productivity. On the can outer surface side, an external surface defect such as a coating film scratching may occur.

On the other hand, when the curing agent amount is larger than the above range, the gel fraction (A) of the coating film may be higher than the above range, and the coating film peeling at the time of heat treatment after molding of the seamless can cannot be suppressed, and the coating film covering property of the seamless can may deteriorate.

Curing Catalyst

The inner surface coating composition and the outer surface coating composition used in the present invention are preferably blended with a curing catalyst for the purpose of promoting the crosslinking reaction of the polyester resin and the curing agent.

As the curing catalyst, a known curing catalyst can be used. For example, an organic sulfonic acid-based acid catalyst or a phosphoric acid-based acid catalyst such as p-toluenesulfonic acid, dodecylbenzenesulfonic acid, dinonyl naphthalene disulfonic acid, phosphoric acid, alkylphosphoric acid, or an amine-neutralized product thereof can be used. Among the curing catalysts described above, the organic sulfonic acid-based acid catalyst is preferably used, and particularly, dodecylbenzenesulfonic acid or an amine-neutralized product thereof is suitable.

The amount of the curing catalyst is desirably in a range of from 0.01 to 3 parts by mass, preferably from 0.01 to 1.0 parts by mass, more preferably 0.01 parts by mass or more and less than 0.5 parts by mass, further preferably 0.02 parts by mass or more and less than 0.3 parts by mass, particularly preferably 0.02 parts by mass or more and less than 0.2 parts by mass, as a solid content, with respect to 100 parts by mass of the polyester resin. Furthermore, in a case where the amine neutralized product of the acid catalyst (e.g., an amine neutralized product of dodecylbenzenesulfonic acid) is used as the curing catalyst, the content of the acid catalyst excluding the amine is only required to be within the above range. When the content of the curing catalyst is smaller than the above range, the effect of accelerating the curing reaction may not be sufficiently obtained. However, when the content of the curing catalyst is larger than the above range, no further effect is expected, and the water resistance of the coating film may be reduced, resulting in deterioration of corrosion resistance, retort whitening resistance, and the like. Furthermore, the acid catalyst is localized to the surface of the metal substrate due to acid-base interaction, which may lead to a decrease in adhesion between the coating film and the metal substrate, and issues such as peeling off of the coating film may occur when molding a can.

Coating Composition

The coating composition that forms the coating film of the coated metal sheet of the present invention contains at least the polyester resin described above as the main agent and the curing agent described above, and preferably the curing catalyst (acid catalyst) described above. Note that, in the present invention, a component having the largest content (mass ratio) is defined as the main agent (main component) among solid components (non-volatile components excluding volatile materials such as water or solvent) that form the coating film in the coating composition. Furthermore, in the coating composition used in the present invention, among all resin components contained in the coating composition, the content of the polyester resin, preferably the non-crystalline polyester resin, which is the main agent, is preferably greater than 50 mass%, more preferably 60 mass% or more, further preferably 70 mass% or more, particularly preferably 80 mass% or more.

In the present invention, examples of the form of the coating composition that can be used in forming the coating film include a solvent-type coating composition and an aqueous coating composition. In the present invention, the solvent-type coating composition is preferable from the perspective of coating properties and the like.

In a case where the coating composition is the solvent-type coating composition, the coating composition contains the polyester resin and the curing agent described above, and an organic solvent as a solvent. Note that the solvent-type coating composition according to the present embodiment is defined as a coating composition made into a coating material by dissolving a main agent resin, a curing agent, and the like in a known organic solvent, in which a mass ratio occupied by the organic solvent in the coating composition is 40 mass% or more.

Examples of the organic solvent include toluene, xylene, aromatic hydrocarbon compounds, ethyl acetate, butyl acetate, methyl ethyl ketone, methyl isobutyl ketone, cyclohexanone, isophoron, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, solvent naphtha, and the like. From these, one, or two or more are selected and used in consideration of solubility, evaporation rate, and the like.

In a case where the coating composition is the aqueous coating composition, the coating composition contains an aqueous medium as a solvent together with a known water-dispersible or water-soluble polyester resin and a curing agent.

As the aqueous medium, similarly to the known aqueous coating composition, water, or a medium obtained by mixing water and an organic solvent such as an alcohol or a polyhydric alcohol, a derivative thereof, or the like can be used as the aqueous medium. In a case where the organic solvent is used, the organic solvent is preferably contained in an amount of from 1 to 45 mass%, and particularly preferably in an amount of from 5 to 30 mass% with respect to the entire aqueous medium in the aqueous coating composition. The composition containing a solvent in the above range improves film-forming performance.

Such an organic solvent preferably has amphiphilicity, and examples thereof include methyl alcohol, ethyl alcohol, isopropyl alcohol, n-butanol, ethylene glycol, methyl ethyl ketone, butyl cellosolve, carbitol, butyl carbitol, propylene glycol monopropyl ether, propylene glycol ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, and 3-methyl3-methoxybutanol.

The coating composition may contain a lubricant, as necessary. In this case, preferably, the blended amount of the lubricant is in a range of from 0.1 to 20 parts by mass, preferably from 0.2 to 10 parts by mass, and more preferably from 0.5 to 5 parts by mass with respect to 100 parts by mass of the polyester resin.

By adding the lubricant, scratches on the coating film during molding processing can be suppressed, and smoothness of the coating film during molding processing can be improved.

Examples of the lubricant that can be added to the coating composition include a fatty acid ester wax that is an esterified product of a polyol compound and a fatty acid, a silicon-based wax, a fluorine-based wax such as polytetrafluoroethylene, a polyolefin wax such as polyethylene, a paraffin wax, lanolin, a montan wax, a microcrystalline wax, a carnauba wax, a silicon-based compound, a petroleum jelly, and the like. One, or two or more of these lubricants can be mixed and used.

To the coating composition, in addition to the above components, a leveling agent, a pigment, a defoaming agent, a coloring agent, and the like, which are blended in a coating composition in the related art, can be added in a known manner.

Further, in a range that does not impair the object of the present invention, other resin components may be included together with the polyester resin. For example, a resin such as polyvinyl acetate, ethylene-vinyl acetate copolymer, a polyolefin-based resin, an epoxy resin, a polyurethane resin, an acrylic resin, a polyvinyl chloride-based resin, a polyvinyl chloride-polyvinyl acetate copolymer resin, polyvinyl alcohol, an ethylene-vinyl alcohol copolymer, polyvinyl pyrrolidone, polyvinyl ethyl ether, polyacrylamide, an acrylamide-based compound, polyethylenimine, starch, gum arabic, methylcellulose, or the like may be included.

In the coating composition, it is suitable that the polyester resin is contained in an amount of from 5 to 55 mass% as a solid content. In a case where the amount of the resin solid content is smaller than the above range, an appropriate coating film amount cannot be ensured, leading to poor covering property of the coating film. On the other hand, in a case where the amount of the resin solid content is larger than the above range, workability and coatability may deteriorate.

Method for Producing Coated Metal Sheet

In the present invention, as described above, the inner surface coating composition containing a polyester resin as a main agent and a resol-type phenolic resin and/or an amino resin as a curing agent is applied to at least a surface to be an inner surface of the metal sheet so as to have the film thickness described above. Preferably, the outer surface coating composition containing the polyester resin as the main agent described above and a curing agent, preferably, an amino resin, is further applied to the surface to be the outer surface of the metal sheet so as to have the film thickness described above.

Baking conditions of the coating composition are appropriately adjusted depending on the types, applied amounts, and the like of the polyester resin, the curing agent, and the metal substrate. The coating composition described above is preferably heat-cured under conditions of a baking temperature of from 150°C to 350°C, preferably higher than 200°C and 320°C or lower, for 5 seconds or longer, preferably from 5 seconds to 30 minutes, particularly preferably from 5 seconds to 180 seconds, to achieve a sufficient degree of curing. In a case where the baking temperature is lower than the above range, a sufficient degree of curing may not be achieved. On the other hand, in a case where the baking temperature is higher than the above range, excessive heating may cause the polyester resin to thermally decompose. In a case where the baking time is shorter than the above range, a sufficient degree of curing may not be achieved. In a case where the baking time is longer than the above range, economic efficiency and productivity decrease.

In the inner surface coating film after baking, it is important that the gel fraction (A) is 55% or more and less than 90% as described above. Further, it is desirable that the difference between the gel fraction (A) and the gel fraction (B) of the inner surface coating film is less than 10%. This makes it possible to sufficiently reduce the residual stress of the coating film after processing and effectively suppress coating film peeling during heat treatment, and to mold a seamless can such as a drawn and wall-ironed can having excellent retort whitening resistance and temporal embrittlement resistance.

The coated metal sheet can can be manufactured as follows: coating is performed by a known coating method such as roll coater coating, spray coating, or dip coating as the coating method on at least a surface of the metal sheet to be on the can inner surface side, preferably on both surfaces, and then baking is performed by a heating means such as a coil oven.

In the coated metal sheet of the present invention, on the inner surface coating film formed on the surface to be on the can inner surface side after molding processing and/or the outer surface coating film formed on the surface to be on the can outer surface side after molding processing, a coating film made of another coating composition (solvent-type coating composition or aqueous coating composition) may be formed as necessary, but is preferably not formed from the perspective of economic efficiency.

The outermost layer of a surface to be on the can inner surface side of the coated metal sheet used in the present invention is desirably the coating film formed of the coating composition, preferably the inner surface coating film made of the inner surface coating composition described above, or a layer made of a wax-based lubricant described below formed on the inner surface coating film. Similarly, the outermost layer of a surface to be the can outer surface side of the coated metal sheet used in the present invention is desirably the coating film formed of the coating composition, preferably the outer surface coating film made of the outer surface coating composition described above, or a layer made of the wax-based lubricant described below formed on the outer surface coating film.

Furthermore, in the coated metal sheet of the present invention, the inner surface coating film and the outer surface coating film made of the above-described coating composition have excellent adhesion to the metal substrate. Thus, the inner surface coating film and/or the outer surface coating film is/are suitably formed in such a manner to directly come into contact with the metal sheet, which is the metal substrate.

Seamless Can

In the seamless can such as a drawn and wall-ironed can of the present invention, the inner surface coating film located on the can inner surface side has the same characteristics as the inner surface coating film of the coated metal sheet described above. That is, the inner surface coating film contains a polyester resin and a resol-type phenolic resin and/or an amino resin as a curing agent, and the gel fraction (A) represented by the above Formula (1a) of the inner surface coating film is 55% or more and less than 90%, preferably from 60 to 88%, more preferably 62% or more and less than 85%, still more preferably from 65 to 84%, particularly preferably from 65 to 80%, and most preferably 68% or more and less than 78%.

As described above for the coated metal sheet of the present invention, also in the seamless can of the present invention, when the gel fraction (A) represented by the above Formula (1a) of the inner surface coating film containing a polyester resin and a resol-type phenolic resin and/or an amino resin as a curing agent is within the above range, it is possible to achieve both retort whitening resistance and temporal embrittlement resistance and coating film peeling resistance during heat treatment in a compatible manner.

From the perspective of retort whitening resistance, the difference between the gel fraction (A) represented by Formula (1a) and the gel fraction (B) represented by Formula (2a) of the inner surface coating film is preferably less than 10%.

The gel fraction (B) is desirably in a range of more than 45% and 99% or less, preferably more than 50% and less than 98%, more preferably more than 52% and less than 95%, further preferably from 55 to 94%, particularly preferably from 55 to 90%, and most preferably 58% or more and less than 88%.

Further, desirably, the seamless can further includes an outer surface coating film on the can outer surface side, and the outer surface coating film also contains a polyester resin, and preferably further contains an amino resin as a curing agent. In addition, it is desirable that the gel fraction (A) represented by Formula (3a) of the outer surface coating film is within a range of 40% or more and less than 90%, preferably 55% or more and less than 90%, more preferably more than 60% and 88% or less, still more preferably from 65 to 85%, particularly preferably from 68 to 84%, and most preferably from 70 to 84%. From the perspective of retort whitening resistance, the difference between the gel fraction (A) represented by the above Formula (3a) and the gel fraction (B) represented by the following Formula (4a) of the outer surface coating film is preferably less than 10%.

$$\text{Gel fraction (B)} = [(W12a - W13a)/(W11a - W13a)] \times 100 \, (\%) \, ... \, (4a)$$

In the formula, W11a represents the mass of the coated metal substrate cut out from the seamless can and having the outer surface coating film formed thereon, W12a represents the mass of the coated metal substrate after being immersed in MEK at 80°C for 60 minutes and then taken out and dried, and W13a represents the mass of the metal substrate after removing the outer surface coating film from the coated metal substrate.

The gel fraction (B) is desirably in a range of more than 45% and 99% or less, preferably more than 50% and less than 98%, more preferably more than 52% and less than 95%, further preferably from 55 to 94%, particularly preferably from 55 to 90%, and most preferably 58% or more and less than 88%.

The gel fractions (A) and (B) in the coating film of the seamless can can be measured, for example, from the inner surface coating film and/or the outer surface coating film located at a central portion of the can bottom of the seamless can, but no limitation is intended. In the present specification, the central portion of the can bottom of the seamless can is a portion having a relatively small degree of processing associated with seamless can molding and having a thickness approximate to the thickness of the coated metal sheet used for molding.

In addition, it is preferable that in the seamless can, the can bottom portion and the can trunk portion at least on the can inner surface side are continuously covered with the inner surface coating film. Additionally, it is preferable that the can bottom portion and the can trunk portion on the can outer surface side are continuously covered with the outer surface coating film.

In the seamless can of the present invention, a second characteristic is that the thickness of the inner surface coating film at the central portion of the can trunk is from 20 to 75% of the thickness of the inner surface coating film at the central portion of the can bottom.

The seamless can of the present invention is a drawn and wall-ironed can (DI can), drawn can (DR can), deep drawn can (DRD can), DTR can, stretch-drawn and ironed can, and the like molded by a known production method using the above-described coated metal sheet as will be described later. In the present invention, a drawn and wall-ironed can is particularly preferable.

Since the above-described various seamless can is molded by drawing and ironing or the like, the thickness of the inner surface coating film located in the can trunk portion is thinned by processing as the metal substrate, and it is preferable that the thickness of the inner surface coating film at the central portion of the can trunk (central portion in the height direction, thinnest portion) is in a range of from 20 to 75% of the thickness of the inner surface coating film at the central portion of the can bottom that is hardly thinned during can forming. In particular, in the drawn and wall-ironed can, the thickness is preferably from 20 to 60%, more preferably from 20 to 50%, still more preferably from 25 to 45%, particularly preferably from 30 to 45%, and most preferably from 30 to 40%. Regarding the thickness of the outer surface coating film, it is preferable that the thickness of the outer surface coating film at the central portion of the can trunk (center in a height direction, thinnest portion) is in a range of from 20 to 75%, and in particular, in the case of a drawn and wall-ironed can, preferably from 20 to 60%, more preferably from 20 to 50%, still more preferably from 25 to 45%, particularly preferably from 30 to 45%, and most preferably from 30 to 40% of the thickness of the outer surface coating film at the central portion of the can bottom.

In the seamless can of the present invention, the thickness of the inner surface coating film at the thinnest portion of the can trunk portion is preferably in a range of 80% or less, and in particular, in the case of a drawn and wall-ironed can, preferably 70% or less, more preferably 60% or less, and still more preferably 55% or less of the thickness of the inner surface coating film at the thickest portion (non-thinned portion) of the can trunk portion. Further, for the outer surface coating film as well, the thickness of the outer surface coating film at the thinnest portion of the can trunk portion is preferably in a range of 80% or less, and in particular, in the case of a drawn and wall-ironed can, preferably 70% or less, more preferably 60% or less, and still more preferably 55% or less of the thickness of the outer surface coating film at the thickest portion (non-thinned portion) of the can trunk portion.

Preferably, the thickness of the metal substrate at the central portion of the can bottom of the seamless can is from 0.10 to 0.50 mm, preferably from 0.15 to 0.40 mm, more preferably from 0.15 to 0.30 mm, and further preferably from 0.20 to 0.28 mm. The type of the metal substrate is the same as that of the coated metal sheet used for molding.

In addition, the film thickness of the inner surface coating film at the central portion of the can bottom of the seamless can is the same as the film thickness described above for the coated metal sheet used for molding, but is in a range of from 0.2 to 20 $\mu$m, preferably from 1 to 16 $\mu$m, more preferably more than 2 $\mu$m and 12 $\mu$m or less. Preferably, the dry coating film mass is in a range of from 3 to 300 mg/dm$^2$, preferably from 15 to 220 mg/dm$^2$, more preferably from 15 to 150 mg/dm$^2$, more preferably greater than 25 mg/dm$^2$ and 150 mg/dm$^2$ or less.

When the content to be filled in the seamless can is an acidic beverage having strong corrosiveness, the film thickness of the inner surface coating film at the central portion of the can bottom is preferably in a range of more than 5 $\mu$m and 16 $\mu$m or less, preferably more than 6 $\mu$m and 12 $\mu$m or less, and more preferably from 6.5 to 10 $\mu$m. The dry coating film mass is preferably in a range of more than 70 mg/dm$^2$ and 150 mg/dm$^2$ or less, preferably greater than 85 mg/dm$^2$ and 150 mg/dm$^2$ or less, and more preferably from 90 to 140 mg/dm$^2$.

On the other hand, when the content to be filled in the seamless can is a low acidic beverage or the like having relatively weak corrosiveness, the film thickness of the inner surface coating film at the central portion of the can bottom is preferably 1 $\mu$m or more and less than 6.5 $\mu$m, preferably more than 2 $\mu$m and less than 6.5 $\mu$m, and more preferably from 2.5 to 6 $\mu$m. Preferably, the dry coating film mass is in a range of 15 mg/dm$^2$ or more and less than 90 mg/dm$^2$, preferably greater than 25 mg/dm$^2$ and less than 90 mg/dm$^2$, and more preferably from 30 to 85 mg/dm$^2$.

Preferably, the film thickness of the outer surface coating film at the central portion of the can bottom is in a range of from 0.2 to 20 $\mu$m, preferably from 1 to 16 $\mu$m, more preferably greater than 2 $\mu$m and 12 $\mu$m or less, and further preferably greater than 2 $\mu$m and 6.5 $\mu$m or less, as dry film thickness. In addition, preferably, the dry coating film mass is in a range of from 3 to 300 mg/dm$^2$, preferably from 15 to 220 mg/dm$^2$, more preferably from 25 to 150 mg/dm$^2$, still more preferably greater than 25 mg/dm$^2$ and lower than 90 mg/dm$^2$.


Method for Producing Seamless Can (drawn and wall-ironed can)

The seamless can of the present invention can be produced by using the coated metal sheet of the present invention described above and by using a known molding method. In particular, as described above, the coated metal sheet of the present invention can mold a seamless can such as a drawn and wall-ironed can having an excellent coating film covering property with no metal exposure without causing can trunk breakage or coating film peeling at the can mouth even during harsh processing such as drawing and ironing. The coated metal sheet of the present invention has excellent moldability and lubrication properties, and thus it is possible to mold the seamless can such as the drawn and wall-ironed can not only in a case of using coolant, but also in a case of performing molding under dry conditions without using coolant. Hereinafter, a method for producing a drawn and wall-ironed can will be described in detail.

It is preferable to apply a wax-based lubricant to the coating film surface of the coated metal sheet prior to drawing and ironing. With this, drawing and ironing can be efficiently performed under dry conditions. Examples of the wax-based lubricant include, but not are limited to, a fatty acid ester wax, a silicon-based wax, a white petroleum jelly, a rice wax, beeswax, a Japanese wax, a mineral-derived wax such as a montan wax, a Fischer-Tropsch wax, a polyolefin wax such as polyethylene or polypropylene, a paraffin-based wax (solid paraffin, fluid paraffin), a lanolin wax, a microcrystalline wax, and a carnauba wax. In particular, a paraffin-based wax and a white petroleum jelly can be preferably used. One, or two or more of these wax-based lubricants can be mixed and used.

Among the above wax-based lubricants, a wax-based lubricant (high-temperature volatile wax-based lubricant) that volatilizes in an amount of 50 mass% or more by short-time (e.g. from 0.1 to 600 seconds, preferably from 1 to 300 seconds, more preferably from 10 to 180 seconds) heat treatment (heating) at a temperature of from 100 to 350°C, preferably from 150 to 250°C, and more preferably about 200°C is desirable, with which the wax-based lubricant can be easily volatilized and removed by heat treatment in a subsequent step after drawing and ironing can molding. Further, when outer surface printing is applied to the can trunk, there is no possibility that the ink is repelled by the wax-based lubricant, which is desirable in terms of outer surface printability. As the high-temperature volatile wax-based lubricant, one that can be volatilized and removed in an amount of 50 mass% or more, preferably 60 mass% or more, more preferably 80 mass% or more, and still more preferably 90 mass% or more by short-time (from 10 to 180 seconds) heat treatment at a temperature of from 150 to 250°C, preferably about 200°C is desirable, and one that has a melting point of from 20 to 100°C, preferably from 25 to 80°C is desirable. The application amount of the wax-based lubricant is desirably in a range of from 1 to 1000 mg/m$^2$, preferably from 2 to 500 mg/m$^2$, more preferably from 5 to 200 mg/m$^2$, still more preferably from 10 to 100 mg/m$^2$, and particularly preferably from 20 to 80 mg/m$^2$ per one surface of the coated metal sheet from the perspective of moldability and productivity.

In the coated metal sheet on which the wax-based lubricant has been applied, a blank is punched by a cupping press, and a drawn cup is molded by a drawing method. In the present invention, it is desirable that a drawn ratio RD defined by the following Formula (8) is in a range of from 1.1 to 2.6, particularly in a range of from 1.4 to 2.6, in total (to the drawn and wall-ironed can). When the drawn ratio is larger than the above range, drawn wrinkles may increase and cracks may occur in the coating film to cause metal exposure.

$$RD = D/d \ ... \ (8)$$

where D represents a blank diameter and d represents a can trunk diameter.

Next, the drawn cup is subjected to re-drawing, that is, ironing in a single stage or several stages (drawing and ironing) to thin the can trunk portion. At this time, in the present invention, the temperature of the molding punch is preferably adjusted to from 10 to 100°C, preferably from 10 to 80°C, and more preferably from 15 to 70°C. When the molding punch temperature is lower than the above range, the wax-based lubricant applied to the coated metal sheet does not have a sufficient slidability, and at the time of removing the can body from the molding punch, a poor stripping property may occur and elongation of the inner surface coating film decreases, which may cause a decrease in the coating film covering property after molding. On the other hand, when the punch temperature is higher than the above range, at the time of removing the can body from the molding punch, the coating film is likely to stick to the molding punch, and a poor stripping property may occur. In addition, it is desirable that the temperature of other molds (dies and the like) used for molding is adjusted to from 10 to 100°C, preferably from 10 to 80°C, and more preferably from 15 to 70°C from the perspective of continuously molding stably.

In the present invention, desirably, an ironed rate R represented by the following Formula (9) is in a range of from 25 to 80%, preferably from 40 to 80%, more preferably from 50 to 80%, further preferably from 55 to 75%, particularly preferably from 55 to 70%, and most preferably higher than 60% and 70% or less. When the ironed rate is lower than the above range, it is not possible to achieve sufficient thinning, and thus economic efficiency is insufficient. On the other hand, in a case where the ironed ratio is higher than the above range, there is a risk of metal exposure.

$$R \ (\%) = (tp - tw)/tp \times 100 \ ... \ (9)$$

where tp represents a thickness of the original coated metal sheet, and tw represents a thickness at the central portion of the can trunk of the drawn and wall-ironed can.

In the drawn and wall-ironed can of the present invention, preferably, the thickness at the central portion of the can trunk (central portion in the height direction, the thinnest portion) is thinned to have a thickness of from 20 to 75%, preferably 20 to 60%, more preferably 20 to 50%, further preferably 25 to 45%, particularly preferably 30 to 45%, and most preferably from 30% to 40% of the thickness of the central portion of the can bottom. Similarly, for the thickness of the metal substrate of the drawn and wall-ironed can, preferably, the thickness of the metal substrate at the central portion of the can trunk is from 20 to 75%, preferably from 20 to 60%, more preferably from 20 to 50%, further preferably from 25 to 45%, particularly preferably from 30 to 45%, and most preferably from 30 to 40% of the thickness of the metal substrate in the central portion of the can bottom. In addition, in a case where the drawn and wall-ironed can is molded from the coated metal sheet by drawing and ironing, the thickness of the coating film located in the can trunk portion is thinned in the same manner as the metal substrate by the processing. Accordingly, as described above, the thickness of the coating film at the central portion of the can trunk is from 20 to 75%, preferably from 20 to 60%, more preferably from 20 to 50%, further preferably from 25 to 45%. particularly preferably 30 to 45%, and most preferably from 30% to 40% of the thickness of the coating film at the central portion of the can bottom, which is hardly thinned during can forming.

In the drawn and wall-ironed can of the present invention, the thickness of the thinnest portion of the can trunk portion is 80% or less, preferably 70% or less, more preferably 60% or less, and still more preferably 55% or less of the thickness of the thickest portion (most non-thinned portion) of the can trunk portion.

In addition, in a case where the drawn and wall-ironed can is molded from the coated metal sheet at least having the inner surface coating film by drawing and ironing as described above, the thickness of the inner surface coating film located in the can trunk portion is thinned by the processing in the same manner as the metal substrate located in the can trunk portion. Accordingly, in the drawn and wall-ironed can of the present invention, the thickness ratio of the inner surface coating film to the metal substrate in the can trunk portion and the thickness ratio of the inner surface coating film to the metal substrate in the can bottom portion are substantially the same. That is, in the drawn and wall-ironed can of the present invention, the thickness ratio of the inner surface coating film to the metal substrate (= thickness of the inner surface coating film/thickness of the metal substrate) is substantially the same in both the can bottom portion and the can trunk portion. Note that "substantially the same" here means that any production errors are included in the range, and for example, means that (thickness of the inner surface coating film/thickness of the metal substrate) of the can trunk portion is in a range of from 0.9 to 1.1 times (thickness of the inner surface coating film/thickness of the metal substrate) of the can bottom portion. Note that the same applies to the outer surface coating film.

Furthermore, in the drawn and wall-ironed can of the present invention, the thickness ratio of the inner surface coating film to the metal substrate in the can trunk portion (= thickness of the inner surface coating film/thickness of the metal substrate) is substantially identical across the entire can trunk portion regardless of a position in the can trunk portion. Note that the same applies to the outer surface coating film.

Note that, desirably, the processing speed of ironing in the single or several stages (moving speed of the punch) is 2000 mm/sec or higher, preferably 3000 mm/sec or higher, more preferably 4000 mm/sec or higher, further preferably 5000 mm/sec or higher, and particularly preferably 6000 mm/sec or higher. By setting the processing speed at the time of ironing to the above speed or higher, processing heat generation becomes large, leading to a high temperature state, which improves processability (elongation) of the coating film. As a result, metal exposure during molding is suppressed, and the covering property of the inner surface coating film and the outer surface coating film after molding can be further improved. Furthermore, by molding at a high temperature, the residual stress in the coating film after molding can be further reduced, which is preferable in terms of suppressing coating film peeling during heat treatment.

After drawing and ironing, doming molding of the bottom portion and trimming of the opening end edge are performed according to a common method as desired.

According to the present invention, after the coated metal sheet is subjected to drawing and ironing or the like, it is preferable to subject the resulting seamless can such as a drawn and wall-ironed can to a heat treatment step. As described above, in the coated metal sheet and the drawn and wall-ironed can of the present invention, since the gel fraction (A) of the surface coating film is controlled to be low at less than 90%, peeling of the coating film is effectively prevented even when the coated metal sheet is heated in the heat treatment step.

As described above, the residual stress in the coating film generated by the processing can be removed by subjecting the seamless can such as a drawn and wall-ironed can after molding to heat treatment at least in the single stage. Removing the residual stress in the coating film makes it possible to improve the adhesion between the coating film and the metal substrate (coating film adhesion) after the processing. As a result, the corrosion resistance of the coating film is significantly improved, and thus the occurrence of corrosion under the coating film can be suppressed, for example, when the seamless can is filled with contents having a strong corrosive property. The temperature of the heat treatment needs to be higher than the glass transition temperature of the coating film, and is in a temperature range of from 100 to 300°C, and preferably from 150 to 250°C. The period of time of the heat treatment is not particularly limited, and heating is performed for from 0.1 to 600 seconds, preferably from 1 to 300 seconds, and more preferably from 10 to 180 seconds. When the wax-based lubricant used in processing is the high-temperature volatile wax-based lubricant, it is possible to volatilize and remove the lubricant from the coating film surface by this heat treatment.

In a case where the residual stress in the coating film of the seamless can such as the drawn and wall-ironed can is not removed by heat treatment, when the coating film at the central portion of the can trunk (central portion in the height direction) where a degree of processing is large is isolated from the metal substrate and heated, the dimension of the coating film largely changes in a direction in which the residual stress is released (mainly in a can height direction). Thus, by measuring a dimension change amount of the isolated coating film due to heating (heat shrinkage rate), it is possible to provide a rough indication of whether the residual stress is removed by heat treatment. Desirably, the heat shrinkage rate (with load) represented by the following Formula (5) in the inner surface coating film at the central portion of the can trunk isolated from the seamless can is 30% or less, preferably 25% or less, and more preferably 20% or less. Further, desirably, the heat shrinkage rate (without load) represented by the following Formula (6) is 50% or less, preferably 45% or less, and more preferably 40% or less. In a case where the heat shrinkage rate is within the range described above, the coating film adhesion is improved and thus excellent corrosion resistance can be exhibited. In a case where the heat shrinkage rate is larger than the range described above, the residual stress is not sufficiently removed, corrosion resistance may reduce due to insufficient coating film adhesion, and the coating film may peel off when the can is subjected to an impact and get dented. In addition, in a case where the outer surface coating film is provided on the can outer surface side, the heat shrinkage rate is also desirably within the range described above in the outer surface coating film at the central portion of the can trunk.

Note that the amount of change in dimension (shrinkage amount) of the isolated coating film due to heating can be measured by a thermomechanical analyzer (TMA) or the like.

$$\text{Heat shrinkage rate (with load)} = (\Delta L_1/L_0) \times 100\ (\%) \ \ldots (5)$$

In the formula, $L_0$ is an initial length (measurement portion) of the coating film isolated from the central portion of the can trunk in the height direction, and $\Delta L_1$ is the maximum shrinkage amount (maximum value of the shrinkage length) of the coating film of the portion corresponding to $L_0$ in the height direction when the temperature is raised from 30°C to 200°C at a temperature rise rate of 5°C/min while applying a load of $5.20 \times 10^5 N/m_2$ per unit area.

$$\text{Heat shrinkage rate (without load)} = (\Delta L_2/L_0) \times 100 \ (\%) \ ... \ (6)$$

where $L_0$ is the initial length (measurement portion) of the coating film isolated from the central portion of the can trunk in the height direction, and $\Delta L_2$ is the maximum shrinkage amount (maximum value of the shrinkage length) of the coating film of the portion corresponding to $L_0$ in the height direction when the temperature is raised from 30°C to 200°C at the temperature rise rate of 5°C/min in an unloaded state.

After heat treatment and after quenching or cooling, a printed layer is further formed on the can trunk portion in a printing process by a known method as needed, and a finishing varnish layer for protecting the printed layer is formed on the printed layer. As desired, single stage or multi-stage neck-in processing is performed, and flange processing is performed to form a can for seaming. Alternatively, after the seamless can such as the drawn and wall-ironed can is molded, the upper portion thereof can be deformed to form a bottle shape, or the bottom portion thereof can be cut out and another can end can be attached thereto to form a bottle shape.

Preferably, a capacity of the seamless can, such as the drawn and wall-ironed can, according to the present invention is 150 mL or more, preferably from 150 to 2200 mL, more preferably from 180 to 1200 mL, and still more preferably from 300 to 700 mL.

The inner surface coating film of the coated metal sheet according to the present invention has excellent can forming processability, and thus it is possible to suppress metal exposure at the time of harsh processing such as drawing and ironing. In addition, coating film peeling does not occur even in heat treatment after molding. Thus, by adjusting molding conditions such as an ironing speed at the time of molding the drawn and wall-ironed can, it is possible to obtain the seamless can such as the drawn and wall-ironed can having an excellent coating film covering property in which the inner surface coating film has a degree of coverage of less than 200 mA in terms of an enamel rater value (ERV).

Here, the degree of coverage of the inner surface coating film obtained in terms of ERV is a value obtained by filling the obtained drawn and wall-ironed can with salt solution of a concentration of 1 mass%, which is an electrolytic solution, to the vicinity of the can opening and measuring ERV by an enamel rater, and is defined as a current value after connecting an anode electrode to a metal exposure portion formed on the outer surface side of the can bottom while immersing a cathode electrode in the salt solution filled in the can, and applying a direct voltage of 6.3 V for 4 seconds at ordinary temperature (20°C). In such a measurement, larger current flowing indicates that there is a defect in the inner surface coating film, which is an insulator, and that the area of metal exposure on the can inner surface is larger.

Desirably, the degree of coverage of the inner surface coating film of the seamless can such as the drawn and wall-ironed can in terms of ERV is less than 200 mA, preferably less than 100 mA, and more preferably less than 50 mA. In a case of expressing the degree of coverage in ERV per unit area ($cm^2$), desirably, the degree of coverage is less than 0.70 $mA/cm^2$, preferably less than 0.35 $mA/cm^2$, and more preferably less than 0.18 $mA/cm^2$. Here, the ERV per unit area is a value obtained by dividing the ERV of the seamless can measured by the method described above by an evaluation area (the total area where the inner surfaces of the can trunk portion and the can bottom portion is in contact with the above-described salt solution).

Note that on the inner surface side of the seamless can such as the drawn and wall-ironed can, after molding, the inner surface may be further subjected to spray-coating to form another coating film on the inner surface coating film as necessary, but the inner surface coating film has a high degree of coverage even after molding, and thus it is not necessary to perform spray-coating. Preferably, spray-coating is not performed from the perspective of economic efficiency. In other words, the outermost layer on the inner surface side of the drawn and wall-ironed can of the present invention is preferably the coating film made of the coating composition, preferably, the inner surface coating film made of the inner surface coating composition described above, or the layer made of a wax-based lubricant formed on the inner surface coating film described above, and more preferably, the inner surface coating film.

On the other hand, for the can outer surface side, at the can bottom portion where at least the printed layer is basically not formed, a coating film made of another coating composition may be further formed on the outer surface coating film formed on the surface layer on the outer surface side of the bottom portion for the purpose of improving transportability of the can body or the like. That is, the outermost layer of the outer surface of the can bottom portion is desirably a coating film made of a coating composition, preferably the outer surface coating film, or a layer made of a wax-based lubricant applied on the outer surface coating film described above, more preferably the outer surface coating film is positioned at the outermost layer of the can bottom portion.

Since the coated metal sheet of the present invention can be used for drawn and wall-ironed can applications made by harsh molding processing, the coated metal sheet can be suitably used for applications other than drawn and wall-ironed cans, for example, seamless cans such as drawn cans (DR cans), deep-drawn cans (DRD cans), DTR cans, and stretch-drawn and ironed cans produced by a known method, can lids, and the like. As a shape of the can lid, a known shape such as an easy-open lid in which a score for forming an opening for pouring a content and a tab for opening are provided can be employed, and either a full open type or a partial open type (stay-on type) may be employed.

Examples

Hereinafter, the present invention will be specifically described using Examples and Comparative Examples. Note that simple "parts" indicate "parts by mass".

Various measurement items of polyester resins A to D were according to the following method. Note that all the polyester resins A to D are non-crystalline polyester resins.

Measurement of number average molecular weight

The number average molecular weight was measured by using a calibration curve of standard polystyrene with gel permeation chromatography (GPC).

Measurement of glass transition temperature

The glass transition temperature was measured by using a differential scanning calorimeter (DSC) at a temperature rise rate of 10°C/min.

Measurement of acid value

One g of a solid product of a polyester resin was dissolved in 10 ml of chloroform and titrated with 0.1 N KOH ethanol solution to determine the acid value of the resin (mg KOH/g). As an indicator, phenolphthalein was used.

Measurement of monomer composition

30 mg of a solid product of a polyester resin was dissolved in 0.6 mL of deuterated chloroform and $^1$H-NMR measurement was performed to determine a monomer composition ratio from peak intensities.

Example 1

Preparation of Inner Surface Coating Composition

A mixture of a polyester resin A (acid value: 5 mgKOH/g, hydroxyl value: 6 mgKOH/g, Tg: 56°C, Mn = 16,000, polyvalent carboxylic acid component composition: terephthalic acid component/isophthalic acid component/trimellitic acid component = 19/80/1 mol%, polyhydric alcohol component composition: 1,4-cyclohexanedimethanol component/2-methyl-1,3-propanediol component = 36/64 mol%) and a polyester resin D (acid value: 22 mgKOH/g, hydroxyl value: 0 mgKOH/g, Tg: 82°C, Mn = 6,000, polyvalent carboxylic acid component composition: terephthalic acid component/trimellitic acid component = 98/2 mol%, polyhydric alcohol component composition: ethylene glycol component/propylene glycol component = 24/76 mol%) at a mass ratio of 90: 10 were used as polyester resins, a resol-type phenolic resin was used as a curing agent, and dodecylbenzenesulfonic acid was used as a curing catalyst (acid catalyst).

The resol-type phenolic resin used was an m-cresol-based resol-type phenolic resin in which methylol groups were alkyl-etherified with n-butanol (proportion of alkyl-etherified methylol groups: 90 mol%, Mn = 1200), and the acid catalyst used was "NACURE5925 " (manufactured by King Industries, Inc., amine-neutralized dodecylbenzenesulfonic acid solution, active ingredient: 25 mass%).

The polyester resin A and the polyester resin D were dissolved in a mixed solvent of methyl ethyl ketone/solvent naphtha = 50/50 (mass ratio) to obtain a polyester resin A solution and a polyester resin D solution each having a solid content of 25 mass%. An n-butanol solution (solid content: 50 mass%) of the resol-type phenolic resin was diluted with methyl ethyl ketone to obtain a resol-type phenolic resin solution having a solid content of 25 mass%.

Next, 360 parts of the polyester resin A solution (solid content: 90 parts), 40 parts of the polyester resin D solution (solid content: 10 parts), 40 parts of the resol-type phenolic resin solution (solid content: 10 parts) and 0.40 parts of an acid catalyst solution (solid content: 0.10 parts) were placed in a glass container and stirred for 10 minutes to prepare a solvent-type coating composition [solid content concentration: about 25 mass%, solid content blending ratio: polyester resin A/polyester resin D/resol-type phenolic resin/acid catalyst = 90/10/10/0.1 (mass ratio)].

Preparation of Outer Surface Coating Composition

A polyester resin B (acid value: 2 mgKOH/g, hydroxyl value: 5 mgKOH/g, Tg: 75°C, Mn = 18,000, polyvalent carboxylic acid composition: terephthalic acid component/isophthalic acid component = 76/24 mol%, polyhydric alcohol component composition: ethylene glycol component/propylene glycol component = 34/66 mol%) was used as a polyester resin, a benzoguanamine resin A (butyl-etherified benzoguanamine resin, imino group-methylol group-containing partially-etherified type) was used as a curing agent, and "NACURE5925 " (manufactured by King Industries, Inc., amine-neutralized dodecylbenzenesulfonic acid solution, active ingredient: 25 mass%) was used as a curing catalyst (acid catalyst).

The polyester resin B was dissolved in a mixed solvent of methyl ethyl ketone/solvent naphtha = 50/50 (mass ratio) to obtain a polyester resin B solution with a solid content of 25 mass%. A butanol solution (solid content: 70 mass%) of the benzoguanamine resin A was dissolved in methyl ethyl ketone to obtain a benzoguanamine resin solution having a solid content of 25 mass%.

Next, 400 parts of the polyester resin B solution (solid content: 100 parts), 60 parts of the benzoguanamine resin solution (solid content: 15 parts), and 0.4 parts of an acid catalyst solution (solid content: 0.10 parts) were put in a glass container and stirred for 10 minutes to prepare a solvent-based coating composition [solid content concentration: about 25 mass%, solid content blending ratio: polyester resin B/benzoguanamine resin A/acid catalyst (dodecylbenzenesulfonic acid) = 100/15/0.1 (mass ratio)].

Production of Coated Metal Sheet

A phosphoric acid chromate-based surface-treated aluminum sheet (3104 alloy, sheet thickness: 0.27 mm) was used as the metal sheet. First, a surface to be on the outer surface side after molding was coated with the outer surface coating composition by a bar coater in such a manner that a dry coating film mass after baking was 40 mg/dm$^2$ (approximately 3 $\mu$m), and drying was performed at 120°C for 60 seconds. Thereafter, a surface to be on the inner surface side on the opposite side was coated with the inner surface coating composition by a bar coater in such a manner that a dry coating film mass after baking was 88 mg/dm$^2$ (approximately 6.4 $\mu$m), drying was performed at 120°C for 60 seconds, and then baking was performed at 250°C (furnace internal temperature in the oven) for 30 seconds to produce the coated metal sheet.

Production of Drawn and Wall-ironed Can

A paraffin wax (that can be volatilized and removed in an amount of 50 mass% or more by heat treatment in a short time at a temperature of about 200°C) as a high-temperature volatile wax-based lubricant was applied (application amount: about 50 mg/m$^2$ per surface) to both surfaces of the coated metal sheet prepared by the above method, and then punched into a circle having a diameter of 142 mm to prepare a shallow drawn cup. Next, the shallow drawn cup was subjected to re-drawing, ironing (three stages), and doming using a punch (with temperature control) with an outer diameter of Φ66 mm under dry conditions. Thereafter, an oven was used to perform heat treatment at 201°C for 75 seconds to obtain a drawn and wall-ironed can [can diameter: 66 mm, height: approximately 130 mm, capacity: approximately 370 ml, total drawn ratio: 2.15, ironed rate: 61%, thickness of central portion of can trunk/thickness of central portion of can bottom × 100 = approximately 40%, thickness of metal substrate of central portion of can trunk/thickness of metal substrate of central portion of can bottom × 100 = approximately 40%, thickness of inner surface coating film of central portion of can trunk/thickness of inner surface coating film of central portion of can bottom × 100 = approximately 39%, mass (film thickness) of inner surface coating film of central portion of can bottom: 86 mg/dm$^2$ (approximately 6.3 $\mu$m), thickness of inner surface coating film of central portion of can bottom/thickness of metal substrate of central portion of can bottom = approximately 0.024, thickness of inner surface coating film of central portion of can trunk/thickness of metal substrate of central portion of can trunk = approximately 0.023]. The paraffin wax was volatilized and removed in an amount of at least 90 mass% after the heat treatment at 201°C for 75 seconds.

Examples 2 to 10, Comparative Examples 1 to 5

A coated metal sheet was produced in the same manner as in Example 1 except that the blending composition (type of polyester resin, type of curing agent, solid content blending ratio of polyester resin/curing agent/acid catalyst) of the inner surface coating composition and the outer surface coating composition was changed as shown in Table 1, and a drawn and wall-ironed can was produced. As the polyester resin, the polyester resin B and a polyester resin C (acid value: 2 mgKOH/g, hydroxyl value: 5 mgKOH/g, Tg: 85°C, Mn = 18,000, polyvalent carboxylic acid composition: terephthalic acid component = 100 mol%, polyhydric alcohol component composition: ethylene glycol component/propylene glycol component = 28/72 mol%) were used in addition to the above-described polyester resin. As the curing agent, in addition to the resol-type phenolic resin and the benzoguanamine resin A described above, a benzoguanamine resin B (mixed etherified benzoguanamine resin of methyl ether and ethyl ether, full ether type), a melamine resin (methyl etherified melamine resin, full ether type), and a p-cresol-based resol-type phenolic resin (a resol-type phenolic resin containing p-cresol as the main component of a starting material) were used.

For coating film characteristics obtained in the inner surface coating composition used in each example and comparative example, tests were conducted in accordance with the following test methods.

Gel Fraction (A)

An isolated coating film sample for measurement was prepared as described below using the inner surface coating composition and the outer surface coating composition used in each example and comparative example. So that coating conditions were the same as the coating conditions (coating material type, dry coating film mass, drying and baking conditions) of the inner surface coating composition and the outer surface coating composition in the coated metal sheet of each example and comparative example, each coating composition was applied to a phosphoric acid chromate-based surface-treated aluminum sheet (3104 alloy, sheet thickness: 0.27 mm) with a bar coater, drying was performed at 120°C, and baking was then performed at 250°C for 30 seconds to form the coated metal sheet. A test piece having a size of 5 cm $\times$ 5 cm was cut out from the coated metal sheet and immersed in a diluted hydrochloric acid aqueous solution to dissolve the aluminum sheet (metal substrate). Subsequently, the film-shaped isolated coating film was taken out, sufficiently washed with distilled water, and dried to obtain an isolated coating film sample for measurement. After the mass (W1) of the sample was measured, the sample was immersed in 30 ml of MEK (methyl ethyl ketone) at ordinary temperature (approximately 20°C) for 1 hour. Thereafter, the solvent-insoluble matter (MEK-insoluble matter) of the sample was taken out onto an aluminum petri dish, dried at 120°C for 30 minutes, and cooled to room temperature. Thereafter, the total mass (W2') of the solvent-insoluble matter on the aluminum petri dish and the sample after drying was measured, and the mass (W0) of the aluminum petri dish measured in advance was subtracted therefrom to determine the mass (W2 = W2' - WO) of the solvent-insoluble matter of the sample after drying. The gel fraction (A) (%) of the inner surface coating film and the outer surface coating film of the coated metal sheet is determined by the following Formula (1). The results are shown in Table 1.

$$\text{Gel fraction (A) (\%)} = 100 \times W2/W1 \; ... \; (1)$$

In the case of obtaining a measurement sample from a coated metal sheet or a drawn and wall-ironed can having coating films formed on both surfaces, an isolated coating film sample for measurement can be obtained by cutting out a test piece, then removing the coating film on one side where measurement is not performed by scraping with sandpaper or the like, and then dissolving the metal substrate by the above-described method or the like. Alternatively, a test piece is cut out from a coated metal sheet or the can bottom portion of a drawn and wall-ironed can, immersed in a boiled aqueous hydrogen peroxide solution for several minutes, sufficiently washed with distilled water, and then the film-like coating film is peeled off from the metal substrate and dried to obtain an isolated coating film sample for measurement.

Gel Fraction (A) of Can Bottom Inner Surface Coating Film

For the drawn and wall-ironed cans of Examples 2 and 3 that were molded as described in the above "Production of Drawn and Wall-ironed Can" and subjected to heat treatment at 201°C for 75 seconds, the gel fraction (A) of the inner surface coating film of the can bottom was measured. An average processing speed during ironing (average moving speed of the punch during ironing) was set to around 5500 mm/sec. The method for preparing an isolated coating film sample for measurement is as follows.

The can bottom portion was cut out from the can bottom of the drawn and wall-ironed can after the heat treatment to have a dimension of 30 mm in a direction of 0° and 30 mm in a direction of 90° with respect to the metal substrate rolling direction, about the central portion of the can bottom. The cut sample was immersed in boiled hydrogen peroxide water for 2 to 3 minutes and sufficiently washed with distilled water, and then the coating film on the inner surface side of the can was peeled off from the metal substrate and dried to obtain an isolated coating film sample for measurement.

The measurement of the gel fraction (A) was performed in the same manner as the measurement method described in the section of "Gel Fraction (A)" above. The results are shown below.

Gel fraction (A) of inner surface coating film of can bottom of drawn and wall-ironed can of Example 2: 80%
Gel fraction (A) of inner surface coating film of can bottom of drawn and wall-ironed can of Example 3: 74%

Gel Fraction (B)

A sample for measurement was prepared as described below using the inner surface coating composition and the outer surface coating composition used in each example and comparative example. So that coating conditions were the same as the coating conditions (coating material type, dry coating film mass, drying and baking conditions) of the inner surface coating composition and the outer surface coating composition in the coated metal sheet of each example and comparative example, each coating composition was coated on a phosphoric acid chromate-based surface-treated aluminum sheet (3104 alloy, sheet thickness: 0.27 mm) with a bar coater, drying was performed at 120°C, and baking was then performed at 250°C for 30 seconds to form the coated metal sheet. A test piece of 5 cm × 5 cm size was cut out from the coated metal sheet, and after measuring the mass of the test piece (W3), using 400 ml of methyl ethyl ketone (MEK), the test piece was immersed in boiling MEK (under reflux at 80°C) for 1 hour to perform MEK extraction at the boiling point for 1 hour. After the test piece after extraction was washed with MEK, the test piece was dried at 120°C for 30 minutes, and the mass of the test piece after extraction (W4) was measured. Further, the coating film was peeled off and removed by a decomposition method with concentrated sulfuric acid, washing and drying were performed, and the mass of the test piece (W5) was measured. The gel fraction (B) (%) of the inner surface coating film and the outer surface coating film of the coated metal sheet is determined by the following Formula (2). The results are shown in Table 1.

$$\text{Gel fraction (B) (\%)} = 100 \times (W4 - W5)/(W3 - W5) \ ... \ (2)$$

When a measurement sample is obtained from a coated metal sheet or a drawn and wall-ironed can having coating films formed on both surfaces, the gel fraction (B) can be measured by the above method after cutting out a test piece and then removing the coating film on one side where measurement is not performed by scraping with sandpaper or the like.
The coated metal sheet and drawn and wall-ironed can obtained in each example and comparative example were evaluated according to the following test method.

Retort Whitening Resistance Evaluation-1 (Coated Metal Sheet)

The retort whitening resistance was evaluated as follows using the coated metal sheet prepared as described in the section of "Production of Coated Metal Sheet" described above.
A test piece having a size of 2.5 cm × 10 cm was cut out from the coated metal sheet. The test piece was placed standing in a glass beaker, and water was poured into the beaker until the height of water reached half the height of the test piece. The glass beaker was placed in an autoclave and subjected to retort treatment at 125°C for 30 minutes. After the retort treatment, the test piece in the autoclave was taken out and allowed to stand at room temperature for cooling, and then the presence or absence of the occurrence of retort whitening in the inner surface coating film and the outer surface coating film of the coated metal sheet was visually evaluated. The results are shown in Table 1.
Evaluation criteria are as follows:

Good: No occurrence of retort whitening is observed.
Marginal: Slight occurrence of retort whitening is observed.
Poor: Significant occurrence of retort whitening is observed.

Retort Whitening Resistance Evaluation-2 (Drawn and Wall-ironed Can)

Retort whitening resistance evaluation-2 (drawn and wall-ironed can) was performed as described below by using the drawn and wall-ironed can after molding as described in the "Production of Drawn and Wall-ironed Can" and subjected to heat treatment at 201°C for 75 seconds. An average processing speed during ironing (average moving speed of the punch during ironing) was set to around 1000 mm/sec.
300 ml of water was poured into the can, and the can was placed in an autoclave and subjected to retort treatment at 125°C for 30 minutes. After the retort treatment, the drawn and wall-ironed can in the autoclave was taken out, the water in the can was discarded, the can was allowed to stand at room temperature and cooled. Then the presence or absence of the occurrence of retort whitening in the inner surface coating film of the drawn and wall-ironed can was visually evaluated.
Evaluation criteria are as follows:

Good: No occurrence of retort whitening is observed.
Marginal: Slight occurrence of retort whitening is observed.
Poor: Significant occurrence of retort whitening is observed.

The results are shown below.

Retort whitening resistance of drawn and wall-ironed can of Example 3: Good
Retort whitening resistance of drawn and wall-ironed can of Example 9: Good
Retort whitening resistance of drawn and wall-ironed can of Comparative Example 2: Poor
Retort whitening resistance of drawn and wall-ironed can of Comparative Example 3: Poor

Evaluation of Temporal Embrittlement

Initial processability and temporal processability were evaluated as the evaluation of temporal embrittlement. The processability was evaluated according to the following bending test method.

A coated metal sheet for evaluation was produced as described below using the inner surface coating composition used in the examples and comparative examples. So that coating conditions were the same as the coating conditions (coating material type, dry coating film mass, drying and baking conditions) of the inner surface coating film in each example and comparative example, the composition was applied to each phosphoric acid chromate-based surface-treated aluminum sheet (3104 alloy, sheet thickness: 0.27 mm) with a bar coater, drying was performed at 120°C for 60 seconds, and baking was then performed at 250°C for 30 seconds to form the coated metal sheet for evaluation. This coated metal sheet was cut into a size of $3.5 \times 3$ cm so that the rolled direction of the aluminum sheet was the long side. Then, this test piece was bent parallel to the short side so that the surface coated with the inner surface coating composition of this test piece was on the outside. After two aluminum sheets (3104 alloy, sheet thickness: 0.27 mm) were interposed as spacers inside the bent portion, a 3 kg weight was dropped from a height of 40 cm at room temperature (approximately 20°C) to perform bending. A width of 2 cm at the bent tip portion was brought into contact with a sponge immersed in a 1% sodium chloride aqueous solution, and a current value (ERV) was measured after applying a voltage of 6.3 V for 4 seconds at room temperature.

Initial processability: The coated metal sheet for evaluation was evaluated within 2 days after preparation.

Temporal processability: The coated metal sheet for evaluation was evaluated in the same manner as in the initial processability after the sheet was stored in a thermostat at 37°C for 2 weeks after preparation.

The evaluation criteria for both the initial processability and the temporal processability are as follows. The results are shown in Table 1.

Excellent: less than 0.4 mA
Good: 0.4 mA or more and less than 1.0 mA
Marginal: 1.0 mA or more and less than 2.5 mA
Poor: 2.5 mA or more

Evaluation of Coating Film Covering Property at Inner Surface (ERV Evaluation)

An evaluation of coating film covering property at the inner surface was performed as described below, for the drawn and wall-ironed can subjected to drawing/ironing and doming as described in the above "Production of Drawn and Wall-ironed Can" (indicated as "without heat treatment" in the table), and the drawn and wall-ironed can further subjected to heat treatment at 201°C for 75 seconds in an oven (indicated as "with heat treatment" in the table). An average processing speed during ironing (average moving speed of the punch during ironing) was set to around 5500 mm/sec.

A metal exposed portion was formed on the outer surface side of the can bottom of the drawn and wall-ironed can, the can body was connected to the anode electrode of an enamel rater, while 360 mL of 1% salt solution was poured into the can and the cathode electrode of the enamel rater was immersed in the salt solution filled in the can, whereby a current value (ERV) after applying a voltage of 6.3 V for 4 seconds at room temperature (approximately 20°C) was measured.

Evaluation criteria are as follows: The results are shown in Table 1.

Excellent: Current value of less than 50 mA (less than 0.18 mA/cm$^2$ per unit area)
Good: Current value of 50 mA or more and less than 200 mA (0.18 mA/cm$^2$ or more and less than 0.70 mA/cm$^2$)
Marginal: Current value of 200 mA or more and less than 700 mA (0.70 mA/cm$^2$ or more and less than 2.50 mA/cm$^2$)
Poor: Current value of 700 mA or more (2.50 mA/cm$^2$ or more)

Evaluation of Coating Film Peeling Resistance

Evaluation of the coating film peeling resistance was performed by observing the presence or absence of peeling of the inner surface coating film and outer surface coating film in the can trunk portion, for the drawn and wall-ironed can after molding as described in the above "Production of Drawn and Wall-ironed Can" and subjected to heat treatment at 201°C for 75 seconds. An average processing speed during ironing (average moving speed of the punch during ironing) was set to around 1000 mm/sec.

Evaluation criteria are as follows: The results are shown in Table 1.

Good: No coating film peeling is observed.
Marginal: Slight coating film peeling is observed at a site that is thinned by harsh processing in can trunk side wall.
Poor: Coating film peeling is observed in a wide range of the site that is thinned by harsh processing in can trunk side wall.

Heat Shrinkage Rate Evaluation

Evaluation of the heat shrinkage rate was performed as described below using the inner surface coating film at the central portion of the can trunk of the drawn and wall-ironed can of Example 3 subjected to drawing and ironing and doming as described in the above "Production of Drawn and Wall-ironed Can" (without heat treatment) and the drawn and wall-ironed can of Example 3 further subjected to heat treatment at 201°C for 75 seconds in an oven (with heat treatment). An average processing speed during ironing (average moving speed of the punch during ironing) was set to around 5500 mm/sec.

The above drawn and wall-ironed can was used to cut out a sample of 10 mm in the can trunk circumferential direction and 20 mm in the can height direction about the central portion of the can trunk (thinnest portion) in a direction of 0° with respect to the metal substrate rolling direction. The coating film on the can outer surface side was removed by scraping with sandpaper or the like to exposure the metal surface, and then immersed in the diluted hydrochloric acid aqueous solution to dissolve the metal substrate. Next, the coating film on the can inner surface side having a film shape was taken out, sufficiently washed with distilled water, and dried, and the resulting film-shaped coating film was cut out to 20 mm long (can height direction) and 4 mm wide (can trunk circumferential direction) to obtain the measurement sample.

The measurement sample was chucked in a thermomechanical analyzer, and the inter-chuck distance (corresponding to the initial length of the measurement portion in the height direction of the coating film) was set to 5 mm. The displacement amount of the measurement sample was measured under the following conditions, and the heat shrinkage rate in the can height direction was evaluated in a loaded state and an unloaded state:

Instrument: TMA/SS6100, available from Seiko Instruments Inc.
Temperature rise rate: 5°C/min
Temperature range: from 30°C to 200°C
Measurement mode: tensile mode
Load in measurement: 5 mN ($5.20 \times 10^5$ N/m$^2$) or no load
Inter-chuck distance: 5 mm

The inter-chuck distance before measurement (corresponding to the initial length of the measurement portion of the coating film) was defined as $L_0$, the maximum value of the shrinkage amount (maximum shrinkage length) in the height direction of a portion corresponding to $L_0$ when the temperature was raised from 30°C to 200°C at a temperature rise rate of 5°C/min while applying a load of $5.20 \times 10^5$ N/m$_2$ per unit area was defined as $\Delta L_1$, and a value calculated by the mathematical formula represented by the following Formula (5) was defined as the heat shrinkage rate (with load). Note that for the displacement amount, shrinkage was defined as a positive value, and expansion or elongation was defined as a negative value. The results are shown below.

$$\text{Heat shrinkage rate (with load)} = (\Delta L_1/L_0) \times 100\ (\%) \dots (5)$$

Heat shrinkage rate of inner surface coating film of drawn and wall-ironed can of Example 3 (without heat treatment) (with load): 66%
Heat shrinkage rate of inner surface coating film of drawn and wall-ironed can of Example 3 (with heat treatment) (with load): 18%

In addition, the inter-chuck distance before measurement (corresponding to the initial length of the measurement portion of the coating film) was defined as $L_0$, the maximum value of the shrinkage amount (maximum shrinkage length) in the height direction of a portion corresponding to $L_0$ when the temperature was raised from 30°C to 200°C at a temperature rise rate of 5°C/min in an unloaded state was defined as $\Delta L_2$, and a value calculated by the mathematical formula represented by the following Formula (6) was defined as the heat shrinkage rate (without load). Note that for the displacement amount, shrinkage was defined as a positive value, and expansion or elongation was defined as a negative value. The results are shown below.

$$\text{Heat shrinkage rate (without load)} = (\Delta L_2 / L_0) \times 100\ (\%) \ ... \ (6)$$

Heat shrinkage rate of inner surface coating film of drawn and wall-ironed can of Example 3 (without heat treatment) (without load): 72%

Heat shrinkage rate of inner surface coating film of drawn and wall-ironed can of Example 3 (with heat treatment) (without load): 34%

Corrosion Resistance Evaluation

Evaluation of the corrosion resistance was performed as described below using the inner surface coating film at the central portion of the can trunk of the drawn and wall-ironed can of Example 3 subjected to drawing and ironing and doming as described in the above "Production of Drawn and Wall-ironed Can" (without heat treatment) and the drawn and wall-ironed can of Example 3 further subjected to heat treatment at 201°C for 75 seconds in an oven (with heat treatment). An average processing speed during ironing (average moving speed of the punch during ironing) was set to around 5500 mm/sec.

The above drawn and wall-ironed can was used to cut out a test piece of 40 mm in the can trunk circumferential direction and 40 mm in the can height direction about the central portion of the can trunk (thinnest portion). A cross-cut flaw having a length of 4 cm and reaching the base metal was made into the test piece using a cutter, the test piece was immersed in an acidic model liquid containing salt. The test piece was then left to stand for 2 weeks at 37°C and then the corrosion state was evaluated. The model liquid used in the test was prepared in such a manner that salt was 0.2% and citric acid was added thereto to adjust the pH to 2.5. For the evaluation criteria, around the cross-cut portion, a test piece having a maximum width of corrosion under the coating film of 1 mm or more was evaluated as Poor, a test piece having a maximum width of corrosion of 0.5 mm or more and less than 1 mm was evaluated as Good, and a test piece having a maximum width of corrosion of less than 0.5 mm was evaluated as Excellent. The results are shown below.

Corrosion state of drawn and wall-ironed can of Example 3 (without heat treatment): Poor
Corrosion state of drawn and wall-ironed can of Example 3 (with heat treatment): Excellent

Table 1 shows the blending composition (type of polyester resin, type of curing agent, solid content blending ratio) of the inner surface coating composition and the outer surface coating composition, the coating film properties (gel fraction (A), gel fraction (B)) of the inner surface coating film and the outer surface coating film, and the evaluation results for each example and comparative example.

[Table 1-1]

| Inner surface coating composition | Polyester resin | Type | Tg (°C) | Acid value (mgKOH/g) | Mn | Example | | | | |
|---|---|---|---|---|---|---|---|---|---|---|
| | | | | | | 1 | 2 | 3 | 4 | 5 |
| | | A | 56 | 5 | 16,000 | 90 | 90 | 90 | 90 | 100 |
| | | B | 75 | 2 | 18,000 | | | | | |
| | | C | 85 | 2 | 18,000 | | | | | |
| | | D | 82 | 22 | 6,000 | 10 | 10 | 10 | 10 | |
| | | $Tg_{mix}$ (°C) | | | | 58 | 58 | 58 | 58 | 56 |
| | | $AV_{mix}$ (mgKOH/g) | | | | 7 | 7 | 7 | 7 | 5 |
| | Curing agent | m-Cresol-based resol-type phenolic resin | | | | 10 | 7 | 5 | 5 | 5 |
| | | Benzoguanamine resin A | | | | | | | | |
| | | p-Cresol-based resol-type phenolic resin | | | | | | | | |
| | | Melamine resin | | | | | | | | |
| | Acid catalyst | Dodecylbenzenesulfonic acid | | | | 0.1 | 0.1 | 0.1 | 0.5 | 0.1 |
| | Coating film characteristics | Gel fraction (A) (%) | | | | 85 | 78 | 71 | 74 | 75 |
| | | Gel fraction (B) (%) | | | | 92 | 82 | 74 | 77 | 79 |
| | | Difference (%) between gel fraction (A) and gel fraction (B) | | | | 7 | 4 | 3 | 3 | 4 |

30

(continued)

| | | | | | | Example | | | | |
|---|---|---|---|---|---|---|---|---|---|---|
| | | | | | | 1 | 2 | 3 | 4 | 5 |
| Outer surface coating composition | Polyester resin | Type | Tg (°C) | Acid value (mgKOH/g) | Mn | | | | | |
| | | B | 75 | 2 | 18,000 | 100 | 100 | 100 | 100 | 100 |
| | Curing agent | Benzoguanamine resin A | | | | 15 | 15 | 15 | 15 | 15 |
| | | Benzoguanamine resin B | | | | | | | | |
| | | Melamine resin | | | | | | | | |
| | Acid catalyst | Dodecylbenzenesulfonic acid | | | | 0.1 | 0.1 | 0.1 | 0.1 | 0.1 |
| | Coating film characteristics | Gel fraction (A) (%) | | | | 79 | 79 | 79 | 79 | 79 |
| | | Gel fraction (B) (%) | | | | 77 | 77 | 77 | 77 | 77 |
| | | Difference (%) between gel fraction (A) and gel fraction (B) | | | | 2 | 2 | 2 | 2 | 2 |
| Evaluation | Retort whitening resistance evaluation-1 | Inner surface | | | | Good | Good | Good | Marginal | Good |
| | | Outer surface | | | | Good | Good | Good | Good | Good |
| | Evaluation of coating film peeling resistance | Inner surface | | | | Marginal | Good | Good | Good | Good |
| | | Outer surface | | | | Good | Good | Good | Good | Good |
| | Evaluation of temporal embrittlement | Initial processability | | | | Excellent | Excellent | Excellent | - | - |
| | | Temporal processability | | | | Excellent | Excellent | Excellent | - | - |
| | Evaluation of coating film covering property at inner surface | Without heat treatment | | | | Excellent | Excellent | Excellent | - | - |
| | | With heat treatment | | | | Marginal | Good | Excellent | - | - |

[Table 1-2]

| Inner surface coating composition | Polyester resin | Type | Tg (°C) | Acid value (mgKOH/g) | Mn | Example 6 | Example 7 | Example 8 | Example 9 | Example 10 |
|---|---|---|---|---|---|---|---|---|---|---|
| | | A | 56 | 5 | 16,000 | 90 | | | | |
| | | B | 75 | 2 | 18,000 | | | 90 | 90 | 100 |
| | | C | 85 | 2 | 18,000 | | 90 | | | |
| | | D | 82 | 22 | 6,000 | 10 | 10 | 10 | 10 | |
| | | $Tg_{mix}$ (°C) | | | | 58 | 85 | 76 | 76 | 75 |
| | | $AV_{mix}$ (mgKOH/g) | | | | 7 | 4 | 4 | 4 | 2 |
| | Curing agent | m-Cresol-based resol-type phenolic resin | | | | 3 | 10 | | | |
| | | Benzoguanamine resin A | | | | | | 20 | 15 | 15 |
| | | p-Cresol-based resol-type phenolic resin | | | | | | | | |
| | | Melamine resin | | | | | | | | |
| | Acid catalyst | Dodecylbenzenesulfonic acid | | | | 0.1 | 0.1 | 0.1 | 0.1 | 0.1 |
| | Coating film characteristics | Gel fraction (A) (%) | | | | 61 | 62 | 85 | 77 | 78 |
| | | Gel fraction (B) (%) | | | | 61 | 90 | 89 | 74 | 74 |
| | | Difference (%) between gel fraction (A) and gel fraction (B) | | | | 0 | 28 | 4 | 3 | 4 |

EP 4 382 446 A1

32

(continued)

| | | | | | | Example | | | | |
|---|---|---|---|---|---|---|---|---|---|---|
| | | | | | | 6 | 7 | 8 | 9 | 10 |
| Outer surface coating composition | Polyester resin | Type | Tg (°C) | Acid value (mgKOH/g) | Mn | | | | | |
| | | B | 75 | 2 | 18,000 | 100 | 100 | 100 | 100 | 100 |
| | Curing agent | Benzoguanamine resin A | | | | 15 | 15 | 15 | 3 | |
| | | Benzoguanamine resin B | | | | | | | | |
| | | Melamine resin | | | | | | | 3 | 3 |
| | Acid catalyst | Dodecylbenzenesulfonic acid | | | | 0.1 | 0.1 | 0.1 | 0.1 | 0.1 |
| | Coating film characteristics | Gel fraction (A) (%) | | | | 79 | 79 | 79 | 84 | 81 |
| | | Gel fraction (B) (%) | | | | 77 | 77 | 77 | 81 | 78 |
| | | Difference (%) between gel fraction (A) and gel fraction (B) | | | | 2 | 2 | 2 | 3 | 3 |
| Evaluation | Retort whitening resistance evaluation-1 | | | Inner surface | | Marginal | Marginal | Good | Good | Good |
| | | | | Outer surface | | Good | Good | Good | Good | Marginal |
| | Evaluation of coating film peeling resistance | | | Inner surface | | Good | Good | Marginal | Good | Good |
| | | | | Outer surface | | Good | Good | Good | Good | Good |
| | Evaluation of temporal embrittlement | | | Initial processability | | Excellent | - | Excellent | - | - |
| | | | | Temporal processability | | Good | - | Excellent | - | - |
| | Evaluation of coating film covering property at inner surface | | | Without heat treatment | | - | Good | - | - | - |
| | | | | With heat treatment | | - | Good | - | - | - |

[Table 1-3]

| | | | | | | Comparative Example | | | | |
|---|---|---|---|---|---|---|---|---|---|---|
| | | | | | | 1 | 2 | 3 | 4 | 5 |
| Inner surface coating composition | Polyester resin | Type | Tg (°C) | Acid value (mgKOH/g) | Mn | | | | | |
| | | A | 56 | 5 | 16,000 | 100 | 90 | | | 90 |
| | | B | 75 | 2 | 18,000 | | | 90 | 100 | |
| | | C | 85 | 2 | 18,000 | | | | | |
| | | D | 82 | 22 | 6,000 | | 10 | 10 | | 10 |
| | | $Tg_{mix}$ (°C) | | | | 56 | 58 | 76 | 76 | 58 |
| | | $AV_{mix}$ (mgKOH/g) | | | | 5 | 7 | 4 | 4 | 7 |
| | Curing agent | m-Cresol-based resol-type phenolic resin | | | | 10 | 2 | | | |
| | | Benzoguanamine resin A | | | | | | 5 | | |
| | | p-Cresol-based resol-type phenolic resin | | | | | | | | 5 |
| | | Melamine resin | | | | | | | 6 | |
| | Acid catalyst | Dodecylbenzenesulfonic acid | | | | 0.1 | 0.1 | 0.1 | 0.1 | 0.1 |
| | Coating film characteristics | Gel fraction (A) (%) | | | | 93 | 52 | 13 | 92 | 13 |
| | | Gel fraction (B) (%) | | | | 97 | 47 | 1 | 93 | 14 |
| | | Difference (%) between gel fraction (A) and gel fraction (B) | | | | 4 | 5 | 12 | 1 | 1 |
| Outer surface coating composition | Polyester resin | Type | Tg (°C) | Acid value (mgKOH/g) | Mn | | | | | |
| | | B | 75 | 2 | 18,000 | 100 | 100 | 100 | 100 | 100 |
| | Curing agent | Benzoguanamine resin A | | | | 15 | 15 | 25 | | |
| | | Benzoguanamine resin B | | | | | | | | 7.8 |

EP 4 382 446 A1

34

(continued)

| | | | | Comparative Example | | | | |
|---|---|---|---|---|---|---|---|---|
| | | | | 1 | 2 | 3 | 4 | 5 |
| | | Melamine resin | | | | | 5.5 | |
| | Acid catalyst | Dodecylbenzenesulfonic acid | 0.1 | 0.1 | 0.1 | 0.1 | 0.1 | 0.5 |
| | Coating film characteristics | Gel fraction (A) (%) | 79 | 79 | 91 | 90 | 15 | |
| | | Gel fraction (B) (%) | 77 | 77 | 97 | 90 | 5 | |
| | | Difference (%) between gel fraction (A) and gel fraction (B) | 2 | 2 | 6 | 0 | 10 | |
| Evaluation | Retort whitening resistance evaluation-1 | Inner surface | Good | Poor | Poor | Good | Poor | |
| | | Outer surface | Good | Good | Good | Good | Poor | |
| | Evaluation of coating film peeling resistance | Inner surface | Poor | Good | Good | Poor | Good | |
| | | Outer surface | Good | Good | Poor | Poor | Good | |
| | Evaluation of temporal embrittlement | Initial processability | - | Excellent | - | - | - | |
| | | Temporal processability | - | Poor | - | - | - | |
| | Evaluation of coating film covering property at inner surface | Without heat treatment | Excellent | - | - | - | - | |
| | | With heat treatment | Poor | - | - | - | - | |
| - Not evaluated | | | | | | | | |

EP 4 382 446 A1

Industrial Applicability

The seamless can such as the drawn and wall-ironed can of the present invention has a coating film with excellent retort whitening resistance and temporal embrittlement resistance, does not experience coating film peeling during heat treatment, is effectively prevented from metal exposure, and has an excellent coating film covering property and corrosion resistance. Thus, the seamless can can be suitably used for applications for containing food and drink products or the like requiring retort sterilization as content. In addition, since the coated metal sheet for the seamless can of the present invention has a coating film with excellent retort whitening resistance and temporal embrittlement resistance, and coating film peeling resistance in which coating film peeling does not occur even during heat treatment after molding, the coated metal sheet can be suitably used for producing a seamless can such as a drawn and wall-ironed can for containing food and drink products requiring retort sterilization as content.

**Claims**

1.  A seamless can comprising an inner surface coating film at least on a can inner surface side, wherein

    the inner surface coating film contains a polyester resin and a resol-type phenolic resin and/or an amino resin as a curing agent, and
    the inner surface coating film has a gel fraction (A) represented by Formula (1a) below of 55% or more and less than 90%:

    $$\text{Gel fraction (A)} = (W2a/W1a) \times 100 \ (\%) \ ... \ (1a)$$

    where W1a represents a mass of the inner surface coating film isolated from a coated metal substrate cut out from the seamless can, and W2a represents a mass of the isolated inner surface coating film after being immersed in MEK at ordinary temperature for 60 minutes and then taken out and dried.

2.  The seamless can according to claim 1, wherein the resol-type phenolic resin is an m-cresol-based resol-type phenolic resin.

3.  The seamless can according to claim 1 or 2, wherein the resol-type phenolic resin is blended in an amount of more than 2 parts by mass and less than 10 parts by mass with respect to 100 parts by mass of the polyester resin.

4.  The seamless can according to any one of claims 1 to 3, wherein the amino resin is a benzoguanamine resin, and the benzoguanamine resin is blended in an amount of 8 parts by mass or more and less than 25 parts by mass with respect to 100 parts by mass of the polyester resin.

5.  The seamless can according to any one of claims 1 to 4, wherein the inner surface coating film further contains an acid catalyst, a content of the acid catalyst in the inner surface coating film being less than 0.5 parts by mass with respect to 100 parts by mass of the polyester resin.

6.  The seamless can according to any one of claims 1 to 5, wherein a difference between a gel fraction (B) of the inner surface coating film represented by Formula (2a) below and the gel fraction (A) is less than 10%.

    $$\text{Gel fraction (B)} = [(W4a - W5a)/(W3a - W5a)] \times 100 \ (\%) \ ... \ (2a)$$

    where W3a represents a mass of a coated metal substrate cut out from the seamless can and having the inner surface coating film formed thereon, W4a represents a mass of the coated metal substrate after being immersed in MEK at 80°C for 60 minutes and then taken out and dried, and W5a represents a mass of a metal substrate after the inner surface coating film is removed from the coated metal substrate.

7.  The seamless can according to any one of claims 1 to 6, wherein a thickness of a central portion of a can trunk is from 20 to 75% of a thickness of a central portion of a can bottom, and a thickness of the inner surface coating film at the central portion of the can trunk is from 20 to 75% of a thickness of the inner surface coating film at the central portion of the can bottom.

8. The seamless can according to any one of claims 1 to 7, wherein a thickness ratio of the inner surface coating film to a metal substrate (thickness of the inner surface coating film/thickness of the metal substrate) is substantially identical in a can bottom portion and a can trunk portion.

9. The seamless can according to any one of claims 1 to 8, further comprising an outer surface coating film on a can outer surface side, wherein the outer surface coating film contains a polyester resin and an amino resin as a curing agent.

10. A seamless can in which the outer surface coating film has a gel fraction (A) represented by Formula (3a) below of 40% or more and less than 90%:

$$\text{Gel fraction (A)} = (W7a/W6a) \times 100 \ (\%) \ ... \ (3a)$$

where W6a represents a mass of the outer surface coating film isolated from a coated metal substrate cut out from the seamless can, and W7a represents a mass of the isolated outer surface coating film after being immersed in MEK at ordinary temperature for 60 minutes and then taken out and dried.

11. The seamless can according to any one of claims 1 to 10, wherein the inner surface coating film at a central portion of a can trunk has a heat shrinkage rate represented by Formula (5) below of 30% or less:

$$\text{Heat shrinkage rate (\%)} = (\Delta L_1/L_0) \times 100 \ ... \ (5)$$

where $L_0$ is an initial length of the coating film isolated from the central portion of the can trunk in a height direction, and $\Delta L_1$ is a maximum shrinkage length of the coating film of a portion corresponding to $L_0$ in the height direction when the temperature is raised from 30°C to 200°C at a temperature rise rate of 5°C/min while applying a load of $5.20 \times 10^5 \text{N/m}_2$ per unit area.

12. The seamless can according to any one of claims 1 to 11, wherein the inner surface coating film at a central portion of a can trunk has a heat shrinkage rate represented by Formula (6) below of 50% or less:

$$\text{Heat shrinkage rate (\%)} = (\Delta L_2/L_0) \times 100 \ ... \ (6)$$

where $L_0$ is an initial length of the coating film isolated from the central portion of the can trunk in a height direction, and $\Delta L_2$ is a maximum shrinkage length of the coating film of a portion corresponding to $L_0$ in the height direction when the temperature is raised from 30°C to 200°C at a temperature rise rate of 5°C/min in an unloaded state.

13. The seamless can according to any one of claims 1 to 12, wherein a covering degree of the inner surface coating film is less than 200 mA in terms of ERV.

14. The seamless can according to any one of claims 1 to 13, the seamless can being a drawn and wall-ironed can.

15. A coated metal sheet for a seamless can, the seamless can comprising an inner surface coating film at least on a surface to be a can inner surface, wherein

the inner surface coating film contains a polyester resin and a resol-type phenolic resin and/or an amino resin as a curing agent,
the inner surface coating film has a gel fraction (A) represented by Formula (1b) of 55% or more and less than 90%, and
a difference between a gel fraction (B) of the inner surface coating film represented by Formula (2b) below and the gel fraction (A) is less than 10%.

$$\text{Gel fraction (A)} = (W2b/W1b) \times 100 \ (\%) \ (1b)$$

where W1b represents a mass of the inner surface coating film isolated from the coated metal sheet, and W2b represents a mass of the isolated inner surface coating film after being immersed in MEK at ordinary temperature for 60 minutes and then taken out and dried;

$$\text{Gel fraction (B)} = [(W4b - W5b)/(W3b - W5b)] \times 100\ (\%) \ldots (2b)$$

where W3b represents a mass of a coated metal sheet having the inner surface coating film formed thereon, W4b represents a mass of the coated metal sheet after being immersed in MEK at 80°C for 60 minutes and then taken out and dried, and W5b represents a mass of a metal sheet after the inner surface coating film is removed from the coated metal sheet.

16. The coated metal sheet for a seamless can according to claim 15, further comprising an outer surface coating film on a surface to be a can outer surface, wherein

the outer surface coating film contains a polyester resin and an amino resin as a curing agent, and
the outer surface coating film has a gel fraction (A) represented by Formula (3b) below of 40% or more and less than 90%:

$$\text{Gel fraction (A)} = (W7b/W6b) \times 100\ (\%) \ldots (3b)$$

where W6b represents a mass of the outer surface coating film isolated from the coated metal sheet, and W7b represents a mass of the isolated outer surface coating film after being immersed in MEK at ordinary temperature for 60 minutes and then taken out and dried.

| INTERNATIONAL SEARCH REPORT | International application No. |
|---|---|
| | **PCT/JP2022/029631** |

**A. CLASSIFICATION OF SUBJECT MATTER**

***B65D 1/16***(2006.01)i; ***B32B 15/08***(2006.01)i; ***B32B 15/09***(2006.01)i; ***B65D 25/14***(2006.01)i
FI: B65D1/16 111; B32B15/09 A; B32B15/08 G; B65D25/14 A

According to International Patent Classification (IPC) or to both national classification and IPC

**B. FIELDS SEARCHED**

Minimum documentation searched (classification system followed by classification symbols)

B65D1/16; B32B15/08; B32B15/09; B65D25/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-69536 A (TOYO SEIKAN GROUP HOLDINGS LTD) 09 May 2019 (2019-05-09) paragraphs [0001]-[0034] | 1-16 |
| Y | JP 2006-89066 A (MITSUBISHI MATERIALS CORP) 06 April 2006 (2006-04-06) paragraph [0022] | 1-16 |
| Y | WO 2020/100776 A1 (TOYO SEIKAN GROUP HOLDINGS LTD) 22 May 2020 (2020-05-22) paragraphs [0016], [0050] | 1-16 |
| Y | WO 2019/159453 A1 (TOYO SEIKAN GROUP HOLDINGS LTD) 22 August 2019 (2019-08-22) paragraph [0012] | 6-16 |
| Y | JP 7-242714 A (SHOWA HIGHPOLYMER CO LTD) 19 September 1995 (1995-09-19) paragraph [0035] | 6-16 |
| Y | JP 2004-285342 A (TOYO BOSEKI) 14 October 2004 (2004-10-14) paragraph [0029] | 11-14 |

☑ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/029631**

### C.    DOCUMENTS CONSIDERED TO BE RELEVANT

| Category* | Citation of document, with indication, where appropriate, of the relevant passages | Relevant to claim No. |
|---|---|---|
| Y | JP 3-180228 A (TOYO SEIKAN KAISHA LTD) 06 August 1991 (1991-08-06)<br>p. 9, lower left column, lines 2-4 | 13-14 |
| A | JP 1-284431 A (TOYO SEIKAN KAISHA LTD) 15 November 1989 (1989-11-15)<br>entire text, all drawings | 1-16 |
| A | JP 2011-255605 A (JFE STEEL CORP) 22 December 2011 (2011-12-22)<br>entire text, all drawings | 1-16 |

Form PCT/ISA/210 (second sheet) (January 2015)

**INTERNATIONAL SEARCH REPORT**
**Information on patent family members**

International application No.

**PCT/JP2022/029631**

| Patent document cited in search report | | | Publication date (day/month/year) | Patent family member(s) | | | Publication date (day/month/year) |
|---|---|---|---|---|---|---|---|
| JP | 2019-69536 | A | 09 May 2019 | (Family: none) | | | |
| JP | 2006-89066 | A | 06 April 2006 | (Family: none) | | | |
| WO | 2020/100776 | A1 | 22 May 2020 | US<br>paragraphs [0031], [0094]<br>EP<br><br>CN | 2022/0025208<br><br>3882026<br><br>113286706 | A1<br><br>A1<br><br>A | |
| WO | 2019/159453 | A1 | 22 August 2019 | US<br>paragraph [0019]<br>EP<br><br>CN | 2021/0079255<br><br>3753991<br><br>111712552 | A1<br><br>A1<br><br>A | |
| JP | 7-242714 | A | 19 September 1995 | (Family: none) | | | |
| JP | 2004-285342 | A | 14 October 2004 | (Family: none) | | | |
| JP | 3-180228 | A | 06 August 1991 | US<br>column 12, lines 9-12<br>EP | 5100017<br><br>441618 | A<br><br>A1 | |
| JP | 1-284431 | A | 15 November 1989 | GB<br>entire text, all drawings | 2219543 | A | |
| JP | 2011-255605 | A | 22 December 2011 | (Family: none) | | | |

Form PCT/ISA/210 (patent family annex) (January 2015)

**EP 4 382 446 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001353812 A
- JP 3872998 B